# EUROPEAN PATENT SPECIFICATION

(11) **EP 2 187 100 B1**
(45) Date of publication and mention of the grant of the patent: **02.10.2013**
(21) Application number: 09014188.8
(22) Date of filing: 12.11.2009
(51) Int. Cl.: F16H 61/02, B62K 11/14, B62M 25/08

(54) **Motorcycle**
Motorrad
Motocyclette

(30) Priority: 14.11.2008 JP 2008292103
(43) Date of publication of application: 19.05.2010
(73) Proprietor: Yamaha Hatsudoki Kabushiki Kaisha, Shizuoka-ken 438-8501 (JP)
(72) Inventor: Zenno, Toru, Iwata-shi Shizuoka-ken 438-8501 (JP)
(74) Representative: Zimmermann, Tankred Klaus

(56) References cited:
- WO-A1-03/099601

## Description

### BACKGROUND OF THE INVENTION

### Field of the Invention

The present invention relates to a motorcycle including an actuator device that changes the gear position of a transmission.

### Description of the Background Art

Motorcycles including shift actuators that drive transmissions and clutch actuators that drive clutches have been developed.

In a motorcycle discussed in JP 2006-170225 A, a series of gear changing operations is performed by a clutch actuator and a shift actuator. When a driver presses an up-shift switch or a down-shift switch, the clutch actuator disconnects a clutch, the shift actuator then changes the gear position of a transmission, and the clutch actuator then connects the clutch.

On the other hand, JP 7-127670 A discusses an electrically controlled transmission for an automobile. The electrically controlled transmission is switchable to a first shift mode in which a clutch mechanism is disconnected to make a shift change and a second shift mode in which the clutch mechanism remains connected to make a shift change. In the electrically controlled transmission, the shift mode is switched to a first shift mode during an automatic mode in which a shift change is automatically made depending on the vehicle speed and the operating state of an engine, while being switched to a second shift mode during a manual mode in which a shift change is made in response to an instruction from a shift lever. This prevents a torque shock from being generated in the automatic mode for the automobile, and enables a quick shift change in the manual mode for the automobile.

However, a motorcycle is more lightweight than the automobile, and a method for driving the motorcycle greatly differs from a method for driving the automobile. The motorcycle requires high sportiness. Thus, driving performance during a shift change required for the motorcycle differs from driving performance during the shift change required for the automobile. Therefore, a request from a driver cannot be satisfied by applying the shift mode in the automobile to the motorcycle.

WO 031099601 A1 which represents the closest prior art and shows the preamble of claim 1, describes a motorcycle including a gear shift control device, wherein a switch part having a shift-up switch operated when a change gear is shifted up and a shift-down switch operated when the change gear is shifted down is disposed at any position in an area ranging from the lower side to the front side of a handle grip base part.

### SUMMARY OF THE INVENTION

It is an object of the present invention to provide a motorcycle whose sportiness and ride quality are improved depending on its driving state.

This object is achieved by a motorcycle according to claim 1.
(1) According to an aspect of the present invention, a motorcycle includes an engine, an accelerator that is operated by a user to adjust an output of the engine, a first rotating shaft, a clutch device that is switchable to a transmitting state where a torque generated by the engine is transmitted to the first rotating shaft and a disconnected state where the torque generated by the engine is not transmitted to the first rotating shaft, a second rotating shaft, a transmission that transmits to the second rotating shaft the torque transmitted to the first rotating shaft, a driving wheel that is driven by the torque transmitted to the second rotating shaft, an actuator device that drives the clutch device and the transmission, a shifting instructor configured to generate instructions for up-shifting or down-shifting of the transmission by a user's operation, a driving state detector that detects the driving state of the motorcycle, and a control device that is switchable to a first transmission control mode in which the actuator is controlled in response to the instructions generated by the shifting instructor and a second transmission control mode in which the actuator device is controlled in response to the driving state detected by the driving state detector, in which the control device controls the actuator device according to a first control pattern (or a first control sequence) for changing the gear position of the transmission without switching the clutch device to the disconnected state when the operation amount of the accelerator is a first value or more, while controlling the actuator device according to a second control pattern (or a second control sequence) for changing the gear position of the transmission by switching the clutch device to the disconnected state when the operation amount of the accelerator is less than the first value in the first transmission control mode during the up-shifting, and the control device controls the actuator device according to a third control pattern (or a third control sequence) for changing the gear position of the transmission by switching the clutch device to the disconnected state in the second transmission control mode during the up-shifting.
   In the motorcycle, when the clutch device is in the transmitting state, the clutch device transmits the torque generated by the engine to the first rotating shaft, the transmission transmits the torque transmitted to the first rotating shaft to the second rotating shaft, and the driving wheel is driven by the torque transmitted to the second rotating shaft. When the clutch device is in the disconnected state, the torque generated by the engine is not transmitted to the first rotating shaft, so that the driving wheel is not driven.
   The control device is selectively switched to the first transmission control mode and the second transmission control mode. In the first transmission control mode, when the shifting instructor generates the instructions for the up-shifting or the down-shifting by the user's operation, the control device controls the actuator device in response to the instructions generated by the shifting instructor. In the second transmission control mode, the control device controls the actuator device in response to the driving state detected by the driving state detection device.
   In the first transmission control mode during the up-shifting, when the operation amount of the accelerator is the first value or more, the actuator device is controlled according to the first control pattern. In this case, the clutch device is not switched to the disconnected state so that the gear position of the transmission is changed. Thus, the gear position of the transmission is quickly changed without disconnecting the clutch device at timing intended by the driver with the output of the engine being high. Therefore, the driver can perform high sportiness driving.
   In the first transmission control mode during the up-shifting, when the operation amount of the accelerator is less than the first value, the actuator device is controlled according to the second control pattern. In this case, the clutch device is switched to the disconnected state so that the gear position of the transmission is changed. Thus, the gear position of the transmission is smoothly changed at timing intended by the driver with the output of the engine being low. Therefore, the driver can perform comfortable driving.
   In the second transmission control mode during the up-shifting, the actuator device is controlled according to the third control pattern. In this case, the clutch device is switched to the disconnected state so that the gear position of the transmission is changed. Thus, the gear position of the transmission is smoothly changed automatically. Therefore, the driver can perform comfortable driving.
   These results show that the sportiness and the ride quality are improved according to the driving state to satisfy a request from the driver of the motorcycle.
(2) The first value may be set such that the higher the traveling speed of the motorcycle is, the lower the first value becomes.
   In this case, the higher the traveling speed of the motorcycle is, the wider the range of the operation amount of the accelerator, in which the control according to the first control pattern is carried out, becomes. This enables high sportiness driving even with the output of the engine being relatively low when the traveling speed of the motorcycle is high.
(3) The first value may be set higher during a change from the first gear position to the second gear position than during a change from the second or higher gear position to the succeeding gear position.
   The control according to the first control pattern is carried out in a narrower range of the operation amount of the accelerator and the control according to the second control pattern is carried out in a wider range of the operation amount of the accelerator during the change from the first gear position to the second gear position than during the change from the second or higher gear position to the succeeding gear position. Therefore, between the gear positions that greatly differ in reduction ratio, the gear position of the transmission is smoothly changed with the output of the engine being low and relatively high, which prevents the ride quality from deteriorating. Between the gear positions that slightly differ in reduction ratio, the gear position of the transmission is quickly changed with the output of the engine being relatively low, which ensures high sportiness driving.
(4) The second control pattern may include a first connection transition pattern (or a first connection transition sequence) for shifting the clutch device from the disconnected state to the transmitting state in a first period of time after the gear position of the transmission is changed, and a second connection transition pattern (or a second connection transition sequence) for shifting the clutch device from the disconnected state to the transmitting state in a second period of time longer than the first period of time after the gear position of the transmission is changed, and the third control pattern may include the first connection transition pattern or the second connection transition pattern.
   In the first connection transition pattern, a period of time during which the clutch device is in a half-clutched state is short when switched from the disconnected state to the transmitting state. In the second connection transition pattern, a period of time during which the clutch device is in a half-clutched state is long when switched from the disconnected state to the transmitting state. Thus, the clutch device is more quickly shifted from the disconnected state to the transmitting state in the first connection transition pattern than in the second connection transition pattern. On the other hand, the clutch device is more smoothly shifted from the disconnected state to the transmitting state in the second connection transition pattern than in the first connection transition pattern. This enables relatively high sportiness and relatively comfortable or sufficiently comfortable driving with the output of the engine being low in the first transmission control mode during the up-shifting. This also enables relatively high sportiness and relatively comfortable or sufficiently comfortable driving in the second transmission control mode during the up-shifting.
(5) The control device may control the actuator device according to the second control pattern including the first connection transition pattern when the operation amount of the accelerator is less than the first value in the first transmission control mode during the up-shifting, and may control the actuator device according to the third control pattern including the first connection transition pattern when the operation amount of the accelerator is a second value or more, while controlling the actuator device according to the third control pattern including the second connection transition pattern when the operation amount of the accelerator is less than the second value in the second transmission control mode during the up-shifting.
   In this case, in the first transmission control mode during the up-shifting, a period of time during which the clutch device is in a half-clutched state is shortened when switched from the disconnected state to the transmitting state with the output of the engine being low. This enables relatively high sportiness and relatively comfortable driving. In the second transmission control mode during the up-shifting, a period of time during which the clutch device is in a half-clutched state is shortened when switched from the disconnected state to the transmitting state with the output of the engine being high. This enables relatively high sportiness and relatively comfortable driving. Furthermore, in the second transmission control mode during the up-shifting, a period of time during which the clutch device is in a half-clutched state is lengthened when switched from the disconnected state to the transmitting state with the output of the engine being low. This enables sufficiently comfortable driving.
(6) The second value may be set such that the higher the traveling speed of the motorcycle is, the lower the second value becomes.
   In this case, the higher the traveling speed of the motorcycle is, the wider the range of the operation amount of the accelerator, in which the control according to the third control pattern including the first connection transition pattern is carried out, becomes. This enables relatively high sportiness and relatively comfortable driving even with the output of the engine being relatively low when the traveling speed of the motorcycle is high.
(7) The second value may be set higher during a change from the first gear position to the second gear position than during a change from the second or higher gear position to the succeeding gear position.
   The control according to the third control pattern including the first connection transition pattern is carried out in a narrower range of the operation amount of the accelerator and control according to the third control pattern including the second connection transition pattern is carried out in a wider range of the operation amount of the accelerator during the change from the first gear position to the second gear position than during the change from the second or higher gear position to the succeeding gear position. Therefore, between the gear positions that greatly differ in reduction ratio, the gear position of the transmission is smoothly changed with the output of the engine being low and relatively high, which prevents the ride quality from deteriorating. Between the gear positions that slightly differ in reduction ratio, the gear position of the transmission is relatively quickly changed with the output of the engine being relatively low, which ensures relatively high sportiness and relatively comfortable driving.
(8) The control device may control the actuator device according to the second control pattern including the first connection transition pattern when the operation amount of the accelerator is less than the first value in the first transmission control mode during the up-shifting, and may control the actuator device according to the third control pattern including the second connection transition pattern in the second transmission control mode during the up-shifting.
   In this case, in the first transmission control mode during the up-shifting, a period of time during which the clutch device is in a half-clutched state is shortened when switched from the disconnected state to the transmitting state with the output of the engine being low. This enables relatively high sportiness and relatively comfortable driving. In the second transmission control mode during the up-shifting, a period of time during which the clutch device is in a half-clutched state is lengthened when switched from the disconnected state to the transmitting state irrespective of the output of the engine. This enables sufficiently comfortable driving.
(9) The control device may control the actuator device according to the second control pattern including the second connection transition pattern when the operation amount of the accelerator is less than the first value in the first transmission control mode during the up-shifting, and may control the actuator device according to the third control pattern including the second connection transition pattern in the second transmission control mode during the up-shifting.
   In this case, in the first transmission control mode during the up-shifting, a period of time during which the clutch device is in a half-clutched state is lengthened when switched from the disconnected state to the transmitting state with the output of the engine being low. This enables sufficiently comfortable driving. In the second transmission control mode during the up-shifting, a period of time during which the clutch device is in a half-clutched state is lengthened when switched from the disconnected state to the transmitting state irrespective of the output of the engine. This enables sufficiently comfortable driving.
(10) The control device may control the actuator device according to a fourth control pattern (or a fourth control sequence) for shifting the clutch device from the disconnected state to the transmitting state in a third period of time after the gear position of the transmission is changed by switching the clutch device to the disconnected state when the operation amount of the accelerator is within at least a part of its range in the first transmission control mode during the down-shifting, and may control the actuator device according to a fifth control pattern (or a fifth control sequence) for shifting the clutch device from the disconnected state to the transmitting state in a fourth period of time longer than the third period of time after the gear position of the transmission is changed by switching the clutch device to the disconnected state when the operation amount of the accelerator is within at least a part of its range in the second transmission control mode during the down-shifting.

In the fourth control pattern, a period of time during which the clutch device is in a half-clutched state is short when switched from the disconnected state to the transmitting state. In the fifth control pattern, a period of time during which the clutch device is in a half-clutched state is long when switched from the disconnected state to the transmitting state. Thus, the clutch device is more quickly shifted from the disconnected state to the transmitting state in the fourth control pattern than in the fifth control pattern. On the other hand, the clutch device is more smoothly shifted from the disconnected state to the transmitting state in the fifth control pattern than in the fourth control pattern. This enables relatively high sportiness and relatively comfortable driving in the first transmission control mode during the down-shifting. This enables sufficiently comfortable driving in the second transmission mode during the down-shifting.

Other features, elements, characteristics, and advantages of the present invention will become more apparent from the following description of preferred embodiments of the present invention with reference to the attached drawings.

### BRIEF DESCRIPTION OF THE DRAWINGS

Fig. 1 is a side view of a motorcycle according to an embodiment of the present invention;
Fig. 2 is a cross-sectional view mainly illustrating the internal configuration of a power unit;
Fig. 3 is a block diagram mainly illustrating the configuration of a transmission control device;
Fig. 4 is a schematic view illustrating the schematic configuration of a handle of a motorcycle;
Fig. 5 illustrates transmission control during up-shifting according to a pattern A;
Fig. 6 illustrates transmission control during up-shifting according to a pattern B;
Fig. 7 illustrates transmission control during up-shifting according to a pattern C;
Fig. 8 illustrates an example of the relationship between respective control patterns in a semi-automatic control mode and a full automatic control mode during up-shifting and an accelerator opening;
Fig. 9 illustrates an example of the relationship between respective control patterns in a semi-automatic control mode and a full automatic control mode during down-shifting and an accelerator opening;
Fig. 10 illustrates an example of the relationship between a first value Q1 illustrated in Fig. 8 and a vehicle speed;
Fig. 11 illustrates an example of the relationship between a second value Q2 illustrated in Fig. 8 and a vehicle speed;
Figs. 12 and 13 are flowcharts illustrating transmission control in a semi-automatic control mode by a CPU;
Fig. 14 is a flowchart illustrating transmission control in a full automatic control mode by a CPU;
Fig. 15 illustrates another example of the relationship between respective control patterns in a semi-automatic control mode and a full automatic control mode during up-shifting and an accelerator opening;
Fig. 16 illustrates still another example of the relationship between respective control patterns in a semi-automatic control mode and a full automatic control mode during up-shifting and an accelerator opening;
Fig. 17 illustrates another example of the relationship between respective control patterns in a semi-automatic control mode and a full automatic control mode during down-shifting and an accelerator opening; and
Fig. 18 illustrates still another example of the relationship between respective control patterns in a semi-automatic control mode and a full automatic control mode during down-shifting and an accelerator opening.

### DESCRIPTION OF THE PREFERRED EMBODIMENTS

Embodiments of the present invention will be now described in detail with reference to the drawings. An operation for changing the gear position of a transmission from the current gear position to the succeeding gear position is referred to as up-shifting, and an operation for changing the gear position of the transmission from the current gear position to the preceding gear position is referred to as down-shifting.

### (1) Configuration of motorcycle

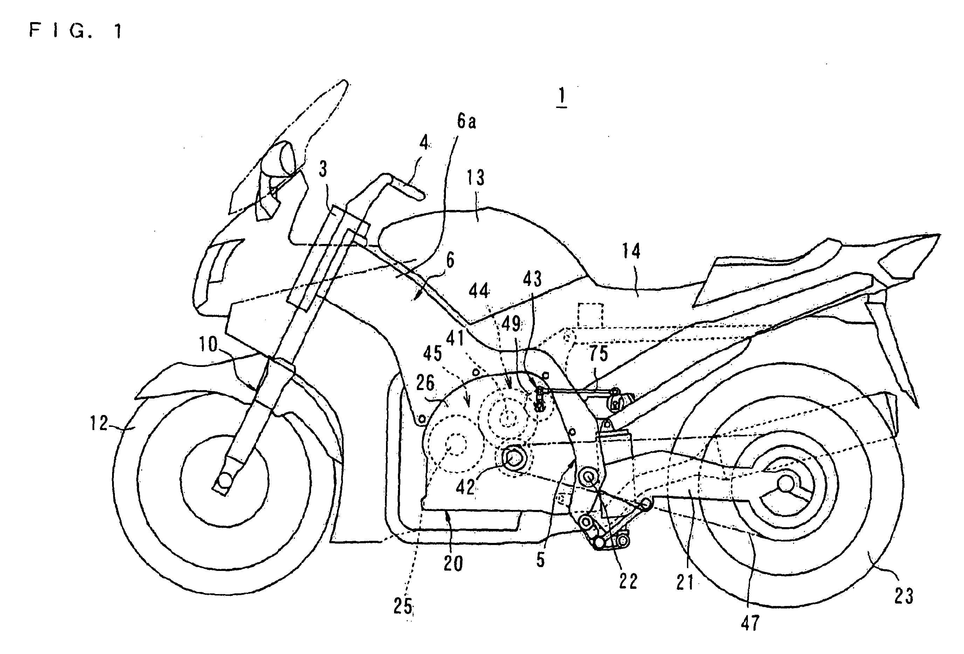

Fig. 1 is a side view of a motorcycle according to an embodiment of the present invention.

As illustrated in Fig. 1, a motorcycle 1 includes a head pipe 3 and a vehicle body frame 6. The vehicle body frame 6 includes a pair of right and left frame parts 6a extending backward from the head pipe 3. In Fig. 1, only the one frame part 6a is illustrated. The rear of the frame part 6a extends downward, and is connected to a rear arm bracket 5. A front end of a rear arm 21 is supported swingably up and down on the rear arm bracket 5 with a pivot shaft 22 sandwiched therebetween. A rear wheel 23 is supported at a rear end of the rear arm 21.

A front fork 10 is connected to the head pipe 3. A handle 4 is provided at an upper end of the front fork 10, and a front wheel 12 is rotatably provided at a lower end of the front fork 10. A fuel tank 13 is arranged on the top of the frame part 6a, and a seat 14 is arranged behind the fuel tank 13.

A power unit 20 is attached to the frame part 6a and the rear arm bracket 5. The power unit 20 includes an engine 45, a clutch 44, and a transmission 43. The engine 45, the clutch 44, and the transmission 43 are integrally assembled in a crank case 26. The engine 45 has a crank shaft 25. The crank shaft 25 extends in a right-and-left direction.

In the present embodiment, the engine 45 is an internal combustion engine using gasoline as a fuel.

### (2) Internal configuration of power unit 20

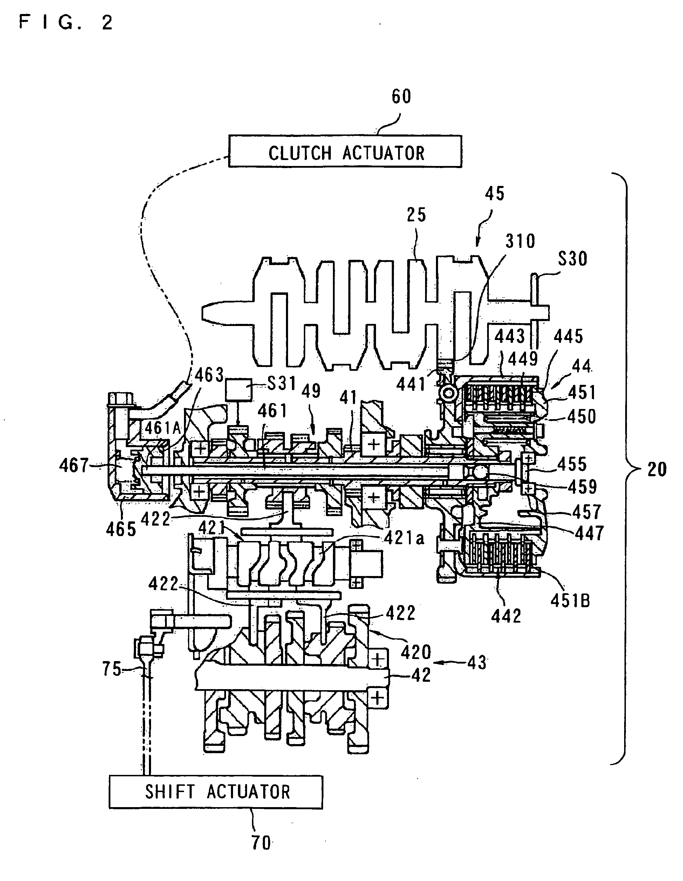

Fig. 2 is a cross-sectional view mainly illustrating the internal configuration of the power unit 20.

As illustrated in Fig. 2, the power unit 20 includes the engine 45, the clutch 44, and the transmission 43.

The crank shaft 25, a main shaft 41, and a drive shaft 42 extend parallel to one another. The clutch 44 connects the crank shaft 25 and the main shaft 41. A clutch actuator 60 switches the clutch 44 to a transmitting state and a disconnected state. A shift actuator 70 switches (changes the gear positions of) transmission gears 49 and 420, described below, of the transmission 43.

The transmitting state of the clutch 44 means a state where a torque generated by the engine 45 is transmitted to the main shaft 41. The disconnected state of the clutch 44 means a state where the torque generated by the engine 45 is not transmitted to the main shaft 41.

In the present embodiment, the clutch 44 is a multi-disk friction clutch, and includes a clutch housing 443 and a clutch boss 447. A plurality of friction plates 445 is arranged inside the clutch housing 443. A plurality of clutch plates 449 is arranged outside the clutch boss 447. The friction plate 445 and the clutch plate 449 constitute a plate group 442.

The clutch 44 may be not a multiple disk clutch but a single disk clutch. The clutch 44 may be a clutch including a centrifugal weight (centrifugal clutch).

A pressure plate 451 is arranged at one end (a portion at the right of Fig. 2) of the main shaft 41. A press portion 451 B projecting toward the plate group 442 is formed in the pressure plate 451. The press portion 451 B is opposed to the friction plate 445 positioned on the outermost side of the plate group 442.

A spring 450 is provided within the clutch 44. The spring 450 urges the pressure plate 451 such that the press portion 451 B presses the plate group 442.

One end (a portion at the right of Fig. 2) of a push rod 455 is fitted in the center of the pressure plate 451 with a bearing 457 sandwiched therebetween. The other end of the push rod 455 is inserted into the main shaft 41. A spherical ball 459 and a push rod 461 adjacent to the ball 459 are provided inside the main shaft 41. The ball 459 is arranged between the other end of the push rod 455 and one end of the push rod 461. A piston 463 is fixed to the other end 461A of the push rod 461. The piston 463 is accommodated inside a cylinder main body 465 slidably in the axial direction of the main shaft 41.

When the clutch actuator 60 is operated, oil is supplied to a space 467 surrounded by the piston 463 and the cylinder main body 465. Thus, the piston 463 moves toward one end (rightward in Fig. 2), and pushes the pressure plate 451 toward one end (rightward in Fig. 2) via the push rod 461, the ball 459, the push rod 455, and the bearing 457. As a result, the press portion 451 B in the pressure plate 451 separates from the friction plate 445, so that the clutch 44 enters the disconnected state.

A gear 310 is integrally supported on the crank shaft 25 of the engine 45. A gear 441 that engages with the gear 310 is supported on the main shaft 41. The torque generated by the engine 45 is transmitted to the clutch housing 443 from the crank shaft 25 via the gears 310 and 441. Furthermore, the torque generated by the engine 45 is transmitted to the clutch boss 447 from the clutch housing 443 by a frictional force generated in the plate group 442. The clutch boss 447 and the main shaft 41 integrally rotate. Thus, the torque (power) generated by the engine 45 is transmitted to the main shaft 41.

The transmitting state of the clutch 44 means a state where the friction plate 445 and the clutch plate 449 rotate at the same speed. A state where the friction plate 445 and the clutch plate 449 rotate at different speeds is referred to as a half-clutched state. The clutch 45 is shifted from the disconnected state to the transmitting state via the half-clutched state.

The configuration of the transmission 43 will be then described. The transmission 43 is a dog-type transmission.

A plurality of transmission gears 49 is attached to the main shaft 41. A plurality of transmission gears 420 corresponding to the plurality of transmission gears 49 is attached to the drive shaft 42. Only the transmission gears 49 and 420, which form a pair, respectively selected out of the plurality of transmission gears 49 and the plurality of transmission gears 420 engage with each other. At least one of the unselected transmission gear 49 and the unselected transmission gear 420 is rotatable with respect to the main shaft 41 or the drive shaft 42. The transmission of the torque between the main shaft 41 and the drive shaft 42 is performed only via the selected pair of transmission gears 49 and 420.

A shift cam 421 selects the pair of transmission gears 49 and 420. A plurality of cam grooves 421a is formed on an outer peripheral surface of the shift cam 421. A plurality of shift forks 422 is mounted on the plurality of cam grooves 421a. Each of the shift forks 422 engages with any one of the transmission gears 49 of the main shaft 41 and any one of the transmission gears 420 of the drive shaft 42. The shift cam 421 rotates so that each of the shift forks 422 is guided to the cam groove 421 a to move in the axial direction of the main shaft 41. Thus, the pair of transmission gears 49 and 420 that engage with each other is selected. In such a way, the gear position of the transmission 43 is determined.

The shift actuator 70 operates so that a shift rod 75 moves back and forth. The shift cam 421 rotates through a predetermined angle at a time by the reciprocating movement of the shift rod 75.

When the clutch 44 is in the transmitting state, as described above, the torque generated by the engine 45 is transmitted to the main shaft 41 via the clutch 44. Furthermore, the torque transmitted to the main shaft 41 is transmitted to the drive shaft 42 via the selected pair of transmission gears 49 and 420, so that the drive shaft 42 rotates. A power transmission mechanism 47 illustrated in Fig. 1 connects the drive shaft 42 to the rear wheel 23 illustrated in Fig. 1. The torque transmitted to the drive shaft 42 is transmitted to the rear wheel 23 via the power transmission mechanism 47, so that the rear wheel 23 rotates. The power transmission mechanism 47 may be a chain, a belt, or a drive shaft.

### (3) Configuration of transmission control device

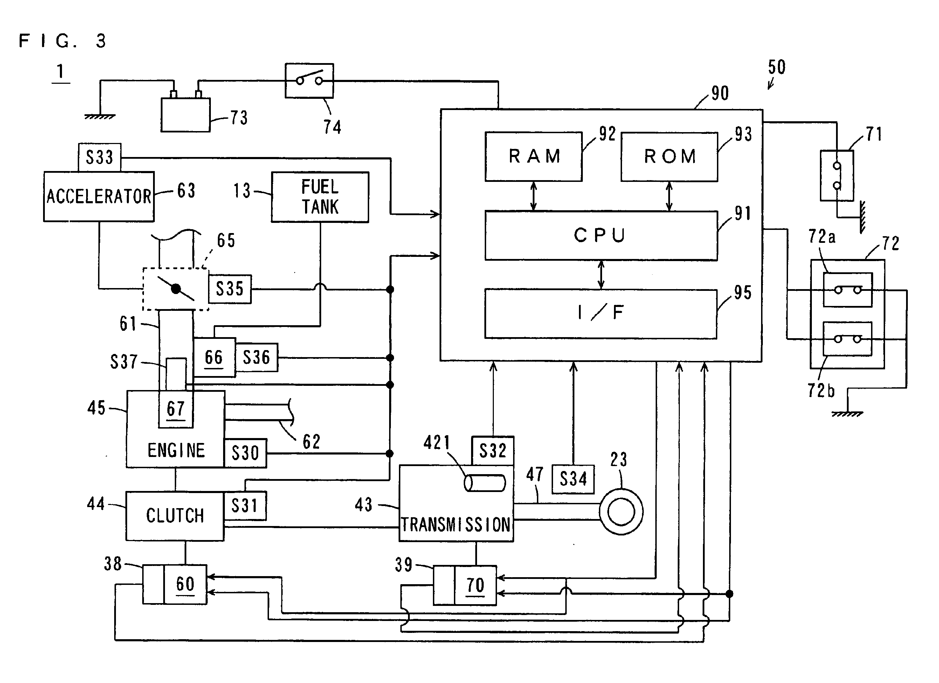

Fig. 3 is a block diagram mainly illustrating the configuration of a transmission control device 50.

As illustrated in Fig. 3, the motorcycle 1 includes a transmission 43, a clutch 44, an engine 45, and the transmission control device 50. The motorcycle 1 includes an intake pipe 61, an exhaust pipe 62, an accelerator 63, a throttle valve 65, a fuel feed device 66, and an ignition device 67.

The throttle valve 65 is provided in the intake pipe 61. The opening of the throttle valve 65 changes depending on the operation amount of the accelerator 63. The opening of the throttle valve 65 may be mechanically controlled or electronically controlled.

The intake pipe 61 is provided with the fuel feed device 66. The fuel feed device 66 may be a vaporizer or a fuel injection device. The ignition device 67 is provided in the engine 45. Ignition timing in the ignition device 67 is electronically controlled. The ignition timing in the ignition device 67 may be mechanically controlled.

The transmission control device 50 includes a clutch actuator 60, a shift actuator 70, and an electric control unit (ECU) 90. The ECU 90 includes a central processing unit (CPU) 91, a random access memory (RAM) 92, a read-only memory (ROM) 93, and an interface circuit 95.

The motorcycle 1 includes a power supply device 73 and a main switch 74. When a driver turns the main switch 74 on, power is supplied from the power supply device 73 to the ECU 90 so that the ECU 90 is operable.

The motorcycle 1 may include a relay switch (not illustrated). In this case, a part of the ECU 90 can be operated even when the main switch 74 is not turned on.

The transmission control device 50 includes a rotational speed sensor S30, a rotational speed sensor S31, a shift position sensor S32, an acceleration opening sensor S33, a vehicle speed sensor S34, a throttle position sensor S35, a fuel feed amount sensor S36, and an ignition timing sensor S37.

The rotational speed sensor S30 detects the rotational speed of the crank shaft 25 (Fig. 2). The rotational speed sensor S31 detects the rotational speed of the main shaft 41 (Fig. 2). The respective positions of the rotational speed sensor S30 and the rotational speed sensor S31 are not particularly limited.

The accelerator opening sensor S33 detects the operation amount of the accelerator 63 as an accelerator opening. The vehicle speed sensor S34 detects the vehicle speed (traveling speed) of the motorcycle 1. The throttle position sensor S35 detects the opening of the throttle valve 65. The fuel feed amount sensor S36 detects the feed amount of a fuel in the fuel feed device 66. The ignition timing sensor S37 detects the ignition timing of an air-fuel mixture in the ignition device 67. The shift position sensor S32 detects the rotational speed of the shift cam 421 (Fig. 2), to detect the gear position of the transmission 43.

The sensors S31 to S37 may directly or indirectly detect a physical quantity to be detected. Alternatively, the sensors S31 to S37 may have an operating function, and may calculate a required physical quantity from the detected physical quantity.

Furthermore, the transmission control device 50 includes potentiometers 38 and 39. The potentiometer 38 detects the rotation angle of the clutch actuator 60, to detect the driving amount of the clutch actuator 60. The potentiometer 39 detects the rotation angle of the shift actuator 70, to detect the driving amount of the shift actuator 70.

The ECU 90 detects the driving state of the motorcycle 1 from at least one of the detected values of the rotational speed sensor S30, the rotational speed sensor S31, the shift position sensor S32, the acceleration opening sensor S33, the vehicle speed sensor S34, the throttle position sensor S35, the fuel feed amount sensor S36, and the ignition timing sensor S37.

In the present embodiment, the driving state includes the vehicle speed of the motorcycle 1 and the operating state of the engine 45, for example, the vehicle speed and the accelerator opening of the motorcycle 1. In this case, the ECU 90 detects the vehicle speed of the motorcycle 1 based on the detected value of the vehicle speed sensor S33, and detects the accelerator opening based on the detected value of the accelerator opening sensor S33.

In the transmission control device 50, the ECU 90 controls both the clutch actuator 60 and the shift actuator 70 or only the shift actuator 70, to carry out transmission control. The transmission control means a series of control such as switching to the disconnected state of the clutch 44, a change of the gear position of the transmission 43, and switching to the transmitting state of the clutch 44.

The transmission control device 50 is switchable to a semi-automatic control mode and a full automatic control mode. The ECU 90 selectively carries out transmission control in the semi-automatic control mode and transmission control in the full automatic control mode.

The ECU 90 is connected to a switch 71 and a shift switch 72. The switch 71 is operated by the driver to switch the semi-automatic control mode and the full automatic control mode. The shift switch 72 includes an up-shift switch 72a and a down-shift switch 72b. The up-shift switch 72a is operated by the driver to generate an instruction for up-shifting. The down-shift switch 72b is operated by the driver to generate an instruction for down-shifting.

The semi-automatic control mode means a control mode in which the clutch actuator 60 and the shift actuator 70 are controlled to perform up-shifting or down-shifting in response to the instruction from the shift switch 72. The full automatic control mode means a control mode in which the clutch actuator 60 and the shift actuator 70 are controlled to perform up-shifting or down-shifting when the detected driving state satisfies predetermined driving conditions.

In the semi-automatic control mode, when the driver turns the up-shift switch 72a on, the ECU 90 is instructed to perform up-shifting. Thus, the ECU 90 controls both the clutch actuator 60 and the shift actuator 70 or only the shift actuator 70, to perform the up-shifting.

In the semi-automatic control mode, when the driver turns the down-shift switch 72b on, the ECU 90 is instructed to perform down-shifting. Thus, the ECU 90 controls both the clutch actuator 60 and the shift actuator 70 or only the shift actuator 70, to perform the down-shifting.

In the full automatic control mode, when the detected driving state satisfies previously set up-shifting conditions, the ECU 90 controls both the clutch actuator 60 and the shift actuator 70 or only the shift actuator 70, to perform up-shifting.

In the full automatic control mode, when the detected driving state satisfies previously set down-shifting conditions, the ECU 90 controls both the clutch actuator 60 and the shift actuator 70 or only the shift actuator 70, to perform down-shifting.

### (4) Schematic configuration of handle

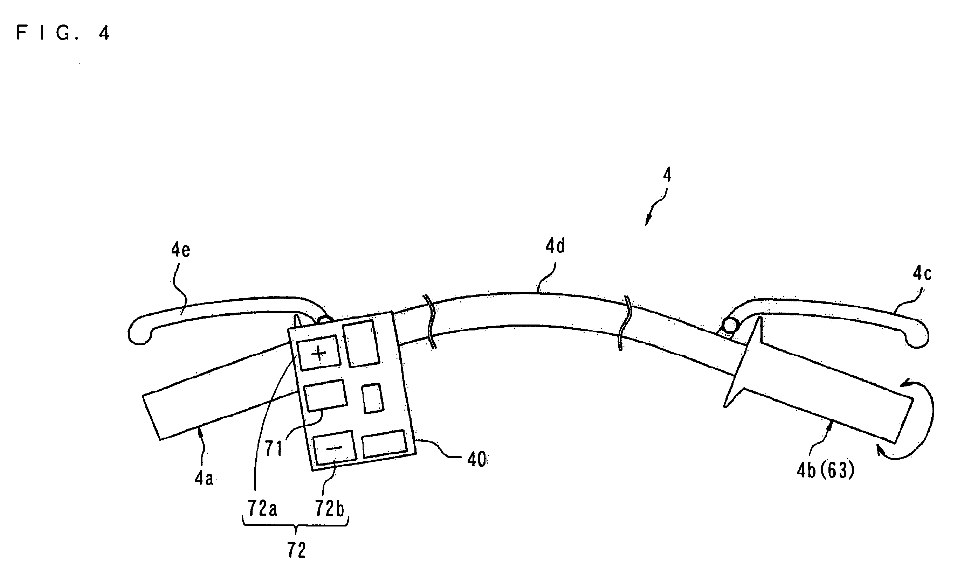

Fig. 4 is a schematic view illustrating the schematic configuration of a handle of the motorcycle 1.

As illustrated in Fig. 4, the handle 4 includes a handle bar 4d, a left grip 4a, and a right grip 4b. The right grip 4b forms the accelerator 63, and is rotatable within a predetermined angle range. The handle 4 is provided with a front brake lever 4c and a rear brake lever 4e. A switch panel 40 is provided at the left of the handle bar 4d. The switch panel 40 may be provided at the right of the handle bar 4d.

The switch 71 is provided at the front of the switch panel 40, for example. The switch 71 is composed of a push button, for example. Every time the switch 71 is switched, the transmission control device 50 is switched from the full automatic control mode to the semi-automatic control mode, or is switched from the semi-automatic control model to the full automatic control mode. The switch 71 is not limited to the push button. The switch 71 may be a slide switch, for example.

The switch panel 40 is provided with a shift switch 72. The shift switch 72 includes an up-shift switch 72a and a down-shift switch 72b.

### (5) Control pattern

The ECU 90 carries out transmission control according to respective control patterns, which differ from each other, in the semi-automatic control mode and the full automatic control mode. In the present embodiment, a pattern A, a pattern B, and a pattern C are used as the control patterns.

In the semi-automatic control mode, up-shifting or down-shifting is started by the driver's intention. Therefore, high sportiness driving can be done. On the other hand, in the full automatic control mode, up-shifting or down-shifting is started irrespective of the driver's intention. Therefore, comfortable driving can be done.

In the pattern A, the gear position of the transmission 43 is changed while the clutch 44 is maintained in the transmitting state without being switched to the disconnected state.

In the pattern B, the clutch 44 is switched to the disconnected state so that the gear position of the transmission 43 is changed, and the clutch 44 is then returned to the transmitting state in a relatively short first period of time. In this case, the half-clutched state hardly occurs when the clutch 44 is shifted from the disconnected state to the transmitting state.

In the pattern C, the clutch 44 is switched to the disconnected state so that the gear position of the transmission 43 is changed, and the clutch 44 is then returned to the transmitting state in a second period of time longer than the first period of time. In this case, the clutch 44 is held in the half-clutched state for a predetermined period of time when the clutch 44 is shifted from the disconnected state to the transmitting state.

In the pattern A, the clutch actuator 60 does not operate. Therefore, periods of time respectively required for the clutch 44 to be switched from the transmitting state to the disconnected state and to be switched from the disconnected state to the transmitting state are not required, so that up-shifting and down-shifting can be quickly performed. Therefore, the pattern A enables higher sportiness driving than the pattern B and the pattern C.

On the other hand, in the pattern C, the clutch 44 is shifted from the disconnected state to the transmitting state via the half-clutched state. In this case, when the clutch 44 enters the half-clutched state, the rotational speed of the clutch actuator 60 decreases, and then increases, so that the shift of the clutch 44 to the transmitting state is completed. Thus, the clutch 44 is smoothly shifted from the disconnected state to the transmitting state. Therefore, the pattern A enables more comfortable driving than the pattern B and the pattern C.

In the pattern B, the clutch 44 is shifted from the disconnected state to the transmitting state in a short period of time. In this case, a period of time required for the clutch actuator 60 to operate in the pattern B is made shorter than in the pattern A. Therefore, the pattern B enables higher sportiness driving than the pattern C, and enables more comfortable driving than the pattern A.

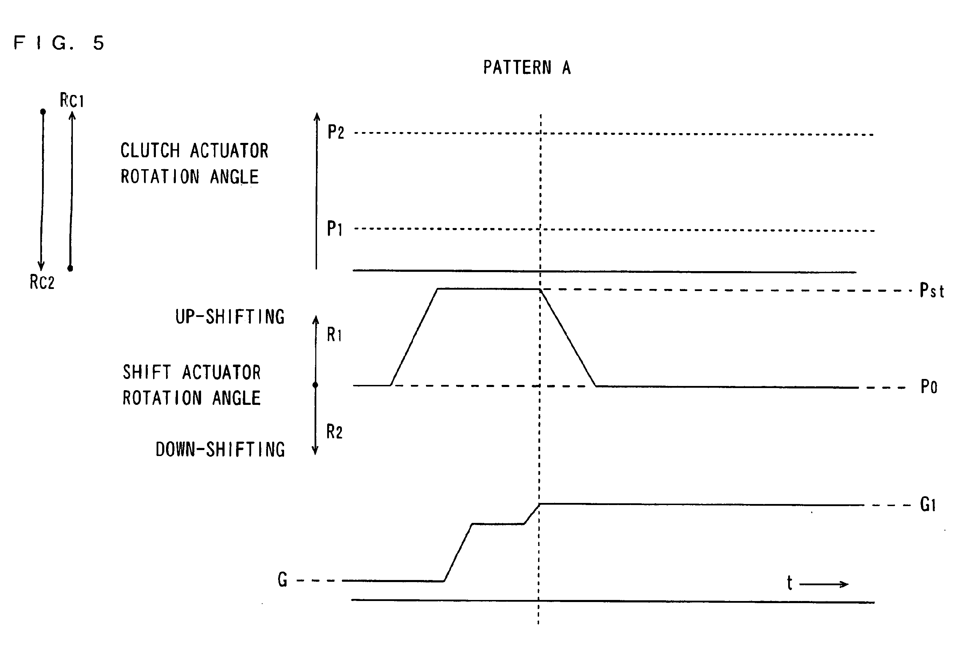

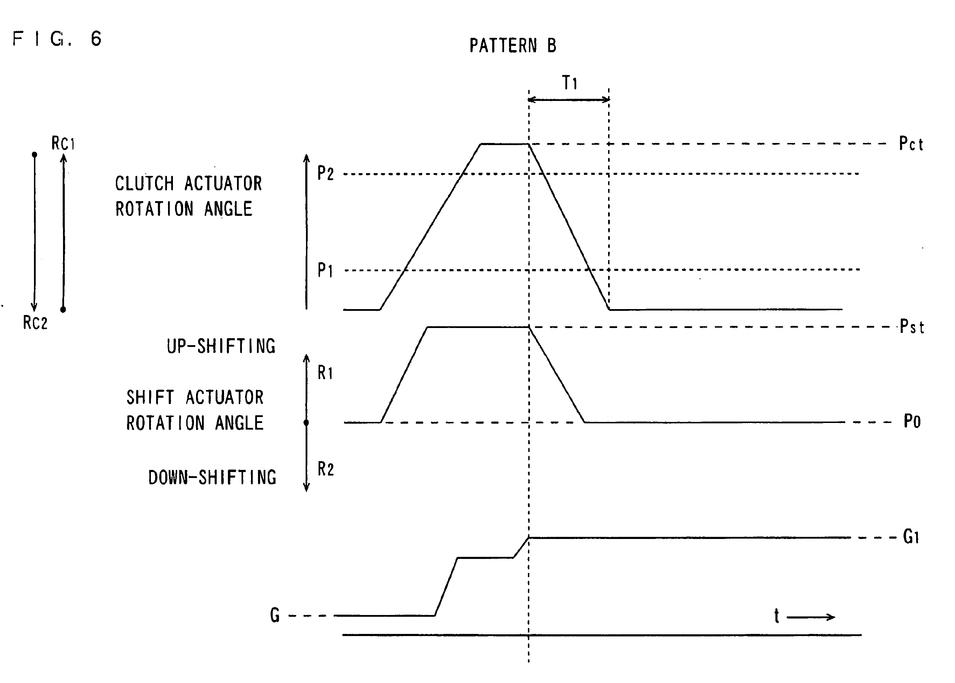

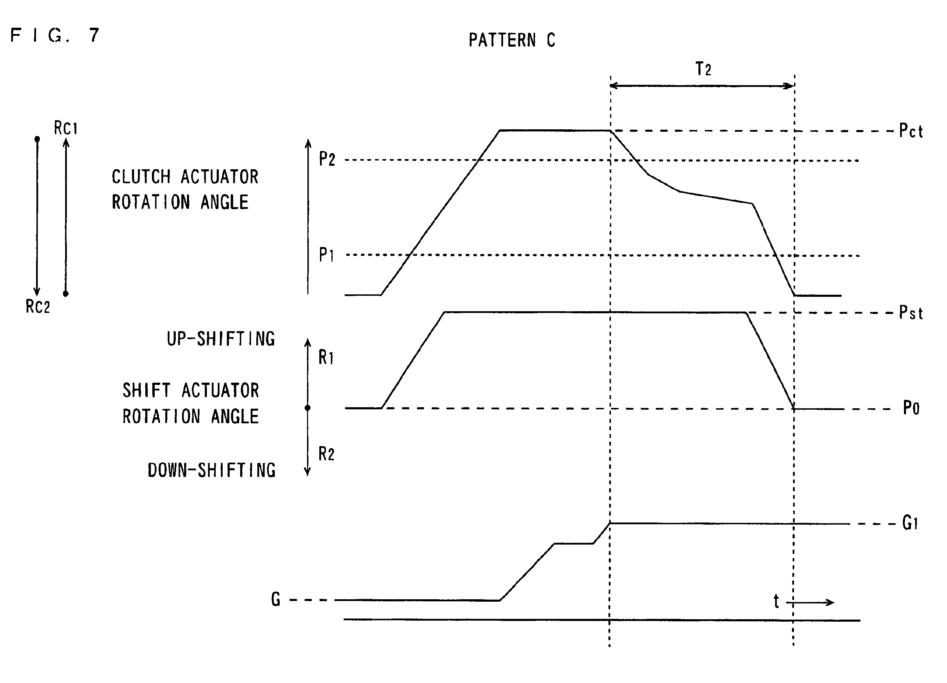

Fig. 5 illustrates the transmission control during up-shifting according to the pattern A, Fig. 6 illustrates the transmission control during up-shifting according to the pattern B, and Fig. 7 illustrates the transmission control during up-shifting according to the pattern C.

Figs. 5 to 7 illustrate a change in the rotation angle of the clutch actuator 60 in their upper stages, a change in the rotation angle of the shift actuator 70 in their intermediate stages, and the rotation angle of the shift cam 421 as the gear position of the transmission 43 in their lower stages. In Figs. 5 to 7, a horizontal axis represents time t.

When the rotation angle of the clutch actuator 60 is P₁ or less, the clutch 44 is in the transmitting state. When the rotation angle of the clutch actuator 60 is P₂ or more, the clutch 44 is in the disconnected state. When the rotation angle of the clutch actuator 60 is more than P₁ and less than P₂, the clutch 44 is in the half-clutched state.

During the up-shifting, the shift actuator 70 rotates in one direction R₁ from a reference position P₀, as illustrated in Figs. 5 to 7. Thus, the current gear position G is changed to the succeeding gear position G₁. When the shift actuator 70 rotates in an opposite direction R₂ from the reference position P₀, the current gear position G is changed to the preceding gear position.

The reference position P₀ means a rotation angle through which the shift actuator 70 rotates in neither an up-shifting direction nor a down-shifting direction.

As illustrated in Fig. 5, in the pattern A, the clutch actuator 60 does not rotate. Therefore, the clutch 44 is maintained in the transmitting state.

In this state, the shift actuator 70 rotates in the direction R₁, stops rotating at the time point where the rotation angle thereof reaches the maximum rotation angle Pst, and is maintained at the maximum rotation angle Pst. Thus, the shift cam 421 illustrated in Fig. 2 rotates, so that the gear position of the transmission 43 is changed from the current gear position G to the succeeding gear position G₁.

In the pattern A, the clutch actuator 60 does not thus operate while the gear position of the transmission 43 is changed, i.e., when the shift actuator 70 is operating. Therefore, the gear position of the transmission 43 is changed while the clutch 44 is maintained in the transmitting state.

As illustrated in Fig. 6, in the pattern B, the clutch actuator 60 rotates in a direction R_{c1}. Thus, the clutch 44 is switched from the transmitting state to the disconnected state. The clutch actuator 60 stops rotating at the time point where the rotation angle thereof reaches the maximum rotation angle Pct, and is maintained at the maximum rotation angle Pct. The shift actuator 70 rotates in the direction R₁ at substantially the same time point as the time point where the clutch actuator 60 starts to operate, stops rotating at the time point where the rotation angle thereof reaches the maximum rotation angle Pst, and is maintained at the maximum rotation angle Pst. Thus, the shift cam 421 illustrated in Fig. 2 rotates, so that the gear position of the transmission 43 is changed from the current gear position G to the succeeding gear position G₁.

When the gear position of the transmission 43 is changed, the clutch actuator 60 rotates in an opposite direction R_{c2} from the maximum rotation angle Pct. At this time, the rotational speed of the clutch actuator 60 does not substantially decrease but is constant. In this case, the change in the rotation angle of the clutch actuator 60 is substantially represented by a straight line, as illustrated in Fig. 6. Virtually, the straight line is not limited to a straight line in a strict sense but includes a substantially straight line. The switching speed of the clutch 44 corresponds to the rotational speed of the clutch actuator 60. The switching speed of the clutch 44 corresponds to the movement speed of the pressure plate 451 illustrated in Fig. 2. Therefore, the switching speed of the clutch 44 does not substantially decrease while the rotation angle of the clutch actuator 60 is changed from the maximum rotation angle Pct to the rotation angle P₁.

When the rotation angle of the clutch actuator 60 decreases to zero, the shift of the clutch 44 to the transmitting state is completed. Thus, the clutch 44 is shifted from the disconnected state to the transmitting state in a first period of time T1. In this case, the half-clutched state hardly occurs.

In the pattern B, the time point where the shift actuator 70 starts to operate and the time point where the clutch actuator 60 starts to operate need not be substantially identical.

As illustrated in Fig. 7, in the pattern C, the clutch actuator 60 rotates in the direction R_{c1}. Thus, the clutch 44 is switched from the transmitting state to the disconnected state. The clutch actuator 60 stops rotating at the time point where the rotation angle thereof reaches the maximum rotation angle Pct, and is maintained at the maximum rotation angle Pct. The shift actuator 70 rotates in the direction R₁ at substantially the same time point as the time point where the clutch actuator 60 starts to operate, stops rotating at the time point where the rotation angle thereof reaches the maximum rotation angle Pst, and is maintained at the maximum rotation angle Pst. Thus, the shift cam 421 illustrated in Fig. 2 rotates, so that the gear position of the transmission 43 is changed from the current gear position G to the succeeding gear position G₁.

When the gear position of the transmission 43 is changed, the clutch actuator 60 rotates in the opposite direction R_{c2} from the maximum rotation angle Pct. When the clutch 44 enters the half-clutched state, the rotational speed of the clutch actuator 60 decreases, and the switching speed of the clutch 44 decreases. Thus, the half-clutched state is maintained for a predetermined period of time. Then, the rotational speed of the clutch actuator 60 increases, and the switching speed of the clutch 44 increases. When the rotation angle of the clutch actuator 60 decreases to zero, the shift of the clutch 44 to the transmitting state is completed. Thus, the clutch 44 is shifted from the disconnected state to the transmitting state via the half-clutched state in a second period of time T2 longer than the first period of time T1 illustrated in Fig. 6.

In the pattern C, the time point where the shift actuator 70 starts to operate and the time point where the clutch actuator 60 starts to operate need not also be substantially identical.

The pattern A, the pattern B, and the pattern C may be used during down-shifting. During the down-shifting according to the pattern A, the pattern B, and the pattern C, the rotational direction of the shift actuator 70 is the direction R₂ opposite to the direction R₁. When the pattern A, the pattern B, and the pattern C are used during the down-shifting, the rotational speed of the clutch actuator 60 and the rotational speed of the shift actuator 70 may be equal to or different from the rotational speed of the clutch actuator 60 and the rotational speed of the shift actuator 70 during the up-shifting.

In the pattern B during the down-shifting, the clutch 44 is shifted from the disconnected state to the transmitting state in a third period of time corresponding to the first period of time T1 illustrated in Fig. 6. In the pattern C during the down-shifting, the clutch 44 is shifted from the disconnected state to the transmitting state in a fourth period of time corresponding to the second period of time T2 illustrated in Fig. 7. In this case, the fourth period of time is longer than the third period of time. The third period of time may be equal to or different from the first period of time T1. The fourth period of time may be equal to or different from the second period of time T2.

### (6) Examples of combination of control patterns

A combination of respective control patterns in the semi-automatic control mode and the full automatic control mode will be then described.

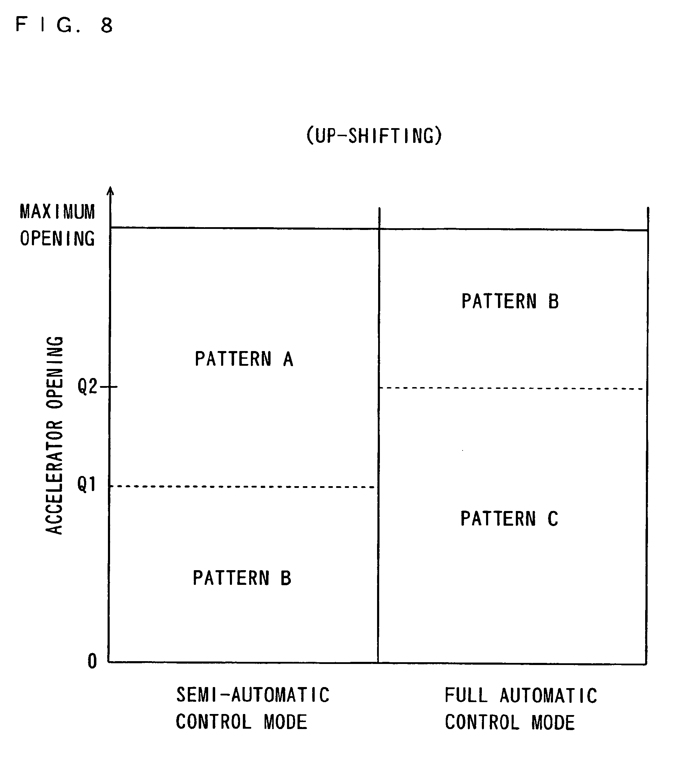

Fig. 8 illustrates an example of the relationship between respective control patterns in the semi-automatic control mode and the full automatic control mode during up-shifting and an accelerator opening. In Fig. 8, the longitudinal axis represents the accelerator opening. The accelerator opening is detected by the accelerator opening sensor S33 illustrated in Fig. 3.

In the semi-automatic control mode, when the accelerator opening (the operation amount of the accelerator 63 illustrated in Fig. 4) is a first value Q1 or more, transmission control is carried out according to the pattern A. More specifically, the clutch 44 is not switched to the disconnected state so that the gear position of the transmission 43 is changed. This enables high sportiness driving. When the accelerator opening is less than the first value Q1, transmission control is carried out according to the pattern B. More specifically, after the clutch 44 is switched to the disconnected state so that the gear position of the transmission 43 is changed, the clutch 44 is returned to the transmitting state without almost passing through the half-clutched state. This enables relatively high sportiness and relatively comfortable driving.

In the full automatic control mode, when the accelerator opening is a second value Q2 or more, transmission control is carried out according to the pattern B. More specifically, after the clutch 44 is switched to the disconnected state so that the gear position of the transmission 43 is changed, the clutch 44 is returned to the transmitting state without passing through the half-clutched state. This enables relatively high sportiness and relatively comfortable driving. When the accelerator opening is less than the second value Q2, transmission control is carried out according to the pattern C. More specifically, after the clutch 44 is switched to the disconnected state so that the gear position of the transmission 43 is changed, the clutch 44 is returned to the transmitting state after being held in the half-clutched state. This enables comfortable driving.

In the example illustrated in Fig. 8, the second value Q2 is more than the first value. Therefore, higher sportiness is attached importance to in the semi-automatic control mode, while better ride quality is attached importance to in the full automatic control mode.

The first value Q1 may be equal to or more than the second value Q2.

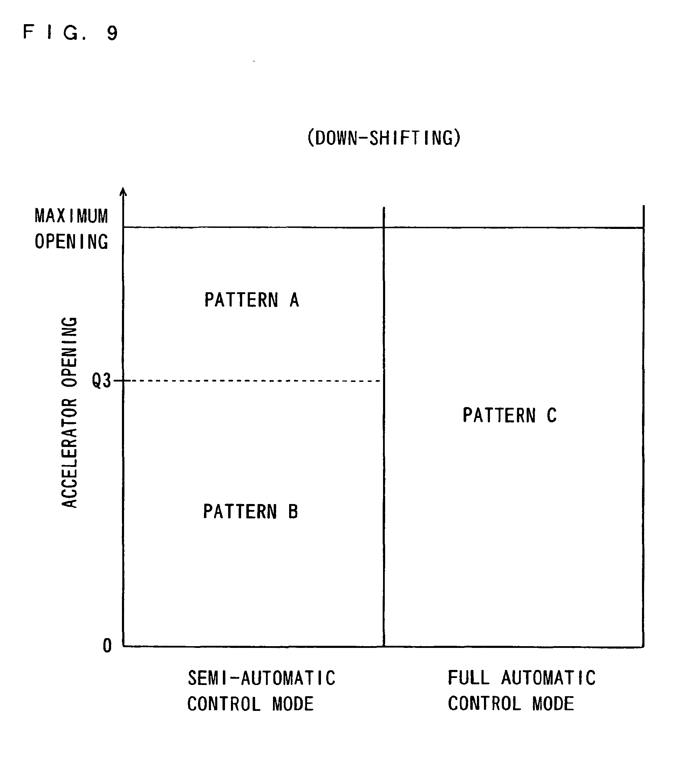

Fig. 9 illustrates an example of the relationship between respective control patterns in the semi-automatic control mode and the full automatic control mode during down-shifting and an accelerator opening. In Fig. 9, the longitudinal axis represents the accelerator opening.

In the semi-automatic control mode, when the accelerator opening is a third value Q3 or more, transmission control is carried out according to the pattern A. More specifically, the clutch 44 is not switched to the disconnected state so that the gear position of the transmission 43 is changed. This enables high sportiness driving. When the accelerator opening is less than the third value Q3, transmission control is carried out according to the pattern B. More specifically, after the clutch 44 is switched to the disconnected state so that the gear position of the transmission 43 is changed, the clutch 44 is returned to the transmitting state without almost passing through the half-clutched state. This enables relatively high sportiness and relatively comfortable driving.

In the full automatic control mode, transmission control is carried out according to the pattern C irrespective of the accelerator opening. More specifically, after the clutch 44 is switched to the disconnected state so that the gear position of the transmission 43 is changed, the clutch 44 is returned to the transmitting state after being held in the half-clutched state. This enables comfortable driving.

The relationship between Fig. 8 and Fig. 9 is previously stored in the RAM 92 and the ROM 93 in the ECU 90.

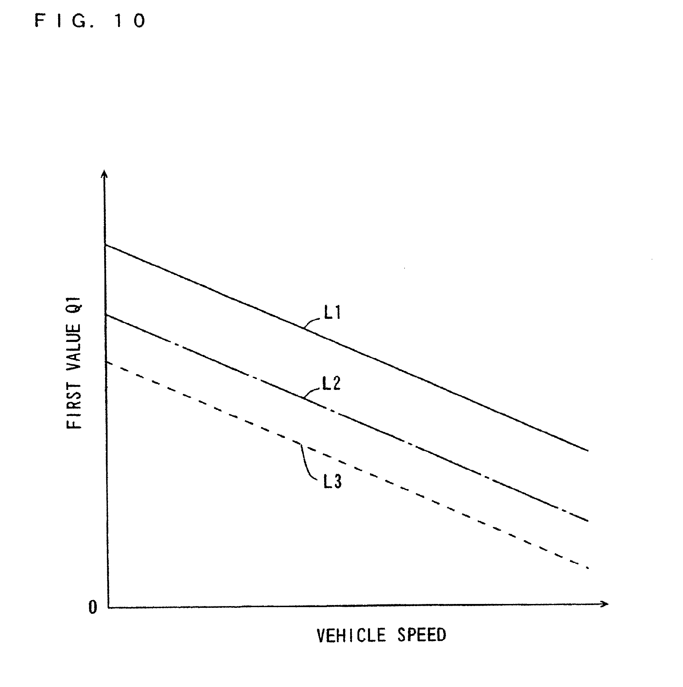

Fig. 10 illustrates an example of the relationship between the first value Q1 illustrated in Fig. 8 and a vehicle speed. In Fig. 10, the vertical axis represents the first value Q1, and the horizontal axis represents the vehicle speed. The vehicle speed is detected by the vehicle speed sensor S34 illustrated in Fig. 3. In this example, the number of gear positions of the transmission 43 is six.

In Fig. 10, a straight line L1 indicates the relationship between the first value Q1 and the vehicle speed in a case where the current gear position is the first gear position. A straight line L2 indicates the relationship between the first value Q1 and the vehicle speed in a case where the current gear position is any one of the second to fourth gear positions. A straight line L3 indicates the relationship between the first value Q1 and the vehicle speed in a case where the current gear position is the fifth gear position.

As illustrated in Fig. 10, the higher the vehicle speed is, the lower the first value Q1 becomes. Thus, the higher the vehicle speed is, the wider the range of the accelerator opening, in which the transmission control according to the pattern A illustrated in Fig. 8 is carried out, becomes. This enables high sportiness driving even with the output of the engine 45 being relatively low when the vehicle speed is high.

The difference between a reduction ratio in the first gear position and a reduction ratio in the second gear position is the largest, the difference between a reduction ratio in the second, third, or fourth gear position and a reduction ratio in the succeeding gear position is the second largest, and the difference between a reduction ratio in the fifth gear position and a reduction ratio in the sixth gear position is the smallest.

As illustrated in Fig. 10, the first value Q1 is set higher during up-shifting from the first gear position to the second gear position than during up-shifting from the second, third, or fourth gear position to the succeeding gear position. The first value Q1 is set higher during up-shifting from the second, third, or fourth gear position to the succeeding gear position than during up-shifting from the fifth gear position to the sixth gear position.

Thus, the transmission control according to the pattern A illustrated in Fig. 8 is carried out in a narrower range of the accelerator opening and transmission control according to the pattern B illustrated in Fig. 8 is carried out in a wider range of the accelerator opening during the up-shifting from the first gear position to the second gear position than during the up-shifting from any one of the second to fifth gear positions to the succeeding position.

The transmission control according to the pattern A illustrated in Fig. 8 is carried out in a wider range of the accelerator opening and the transmission control according to the pattern B illustrated in Fig. 8 is carried out in a narrower range of the accelerator opening during the up-shifting from the fifth gear position to the sixth gear position than during the up-shifting from any one of the first to fourth gear positions to the succeeding gear position.

Between the gear positions that greatly differ in reduction ratio, the gear position of the transmission 43 is smoothly changed with the output of the engine 45 being low and relatively high, which prevents the ride quality from deteriorating. Between the gear positions that slightly differ in reduction ratio, the gear position of the transmission 43 is quickly changed with the output of the engine 45 being relatively low, which ensures high sportiness driving.

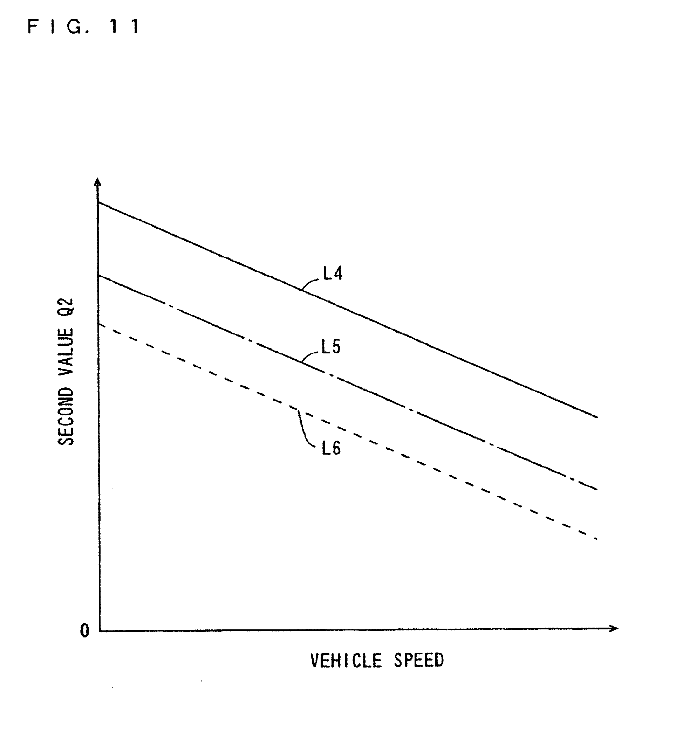

Fig. 11 illustrates an example of the relationship between the second value Q2 illustrated in Fig. 8 and a vehicle speed. In Fig. 10, the vertical axis represents the second value Q2, and the horizontal axis represents the vehicle speed.

In Fig. 11, a straight line L4 indicates the relationship between the second value Q2 and the vehicle speed in a case where the current gear position is the first gear position. A straight line L5 indicates the relationship between the second value Q2 and the vehicle speed in a case where the current gear position is any one of the second to fourth gear positions. A straight line L6 indicates the relationship between the second value Q2 and the vehicle speed in a case where the current gear position is the fifth gear position.

As illustrated in Fig. 11, the higher the vehicle speed is, the lower the second value Q2 becomes. Thus, the higher the vehicle speed is, the wider range of the accelerator opening, in which the transmission control according to the pattern B illustrated in Fig. 8 is carried out, becomes. This enables relatively high sportiness and relatively comfortable driving even with the output of the engine 45 being low when the vehicle speed is high.

As illustrated in Fig. 11, the second value Q2 is set higher during up-shifting from the first gear position to the second gear position than during up-shifting from the second, third, or fourth gear position to the succeeding gear position. The second value Q2 is set higher during up-shifting from the second, third, or fourth gear position to the succeeding gear position than during up-shifting from the fifth gear position to the sixth gear position.

Thus, the transmission control according to the pattern B illustrated in Fig. 8 is carried out in a narrower range of the accelerator opening and transmission control according to the pattern C illustrated in Fig. 8 is carried out in a wider range of the accelerator opening during the up-shifting from the first gear position to the second gear position than during the up-shifting from any one of the second to fifth gear positions to the succeeding position.

The transmission control according to the pattern B illustrated in Fig. 8 is carried out in a wider range of the accelerator opening and the transmission control according to the pattern C illustrated in Fig. 8 is carried out in a narrower range of the accelerator opening during the up-shifting from the fifth gear position to the sixth gear position than during the up-shifting from any one of the first to fourth gear positions to the succeeding gear position.

Between the gear positions that greatly differ in reduction ratio, the gear position of the transmission 43 is smoothly changed with the output of the engine 45 being low and relatively high, which prevents the ride quality from deteriorating. Between the gear positions that slightly differ in reduction ratio, the gear position of the transmission 43 is quickly changed with the output of the engine 45 being relatively low, which ensures high sportiness driving.

Although in the examples illustrated in Figs. 10 and 11, the first value Q1 and the second value Q2 linearly decrease as the vehicle speed increases, the present invention is not limited to the same. The first value Q1 and the second value Q2 may decrease in a curved shape or decrease gradually as the vehicle speed increases.

The third value Q3 during the down-shifting illustrated in Fig. 9 also changes with the vehicle speed and the current gear position, similarly to the first value Q1 illustrated in Fig. 10. The third value Q3 can be greater than the first value Q1 with the vehicle speed and the current gear position fixed. In this case, higher sportiness are attached importance to during the up-shifting, while better ride quality is attached importance to during the down-shifting.

The third value Q3 may be equal to or less than the first value Q1.

The relationship among the first value Q1, the vehicle speed, and the gear position illustrated in Fig. 10, the relationship among the second value Q2, the vehicle speed, and the gear position illustrated in Fig. 11, and the relationship among the third value Q3, the vehicle speed, and the gear position are previously stored in the RAM 92 or the ROM 93 in the ECU 90.

### (7) Transmission control by ECU 90

The transmission control in the semi-automatic control mode and the full automatic control mode by the ECU 90 will be then described. Respective transmission control programs in the semi-automatic control mode and the full automatic control mode are stored in the ROM 93 in the ECU 90. The CPU 91 in the ECU 90 carries out the transmission control in the semi-automatic control mode and the full automatic control mode according to the transmission control programs stored in the ROM 93.

The switch 71 illustrated in Fig. 3 switches the control mode to the semi-automatic control mode or the full automatic control mode.

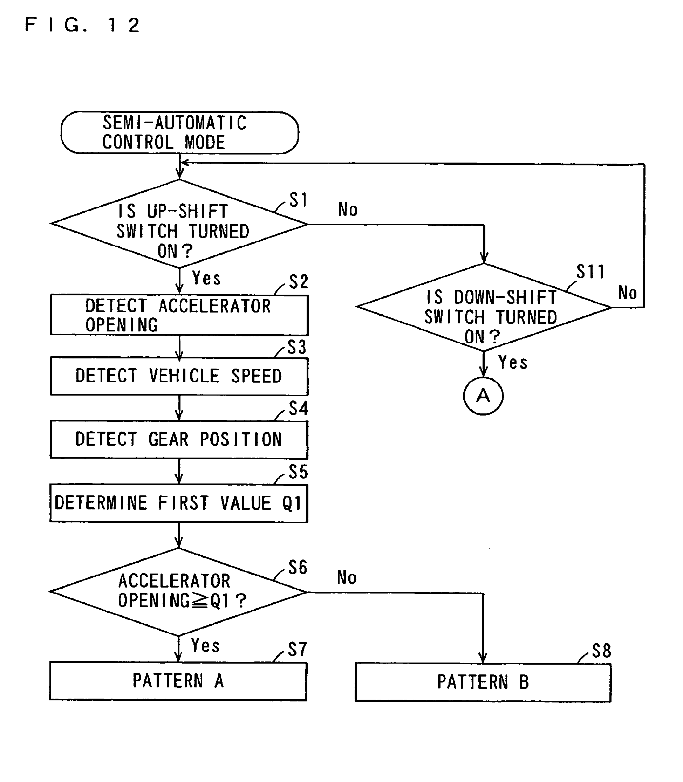

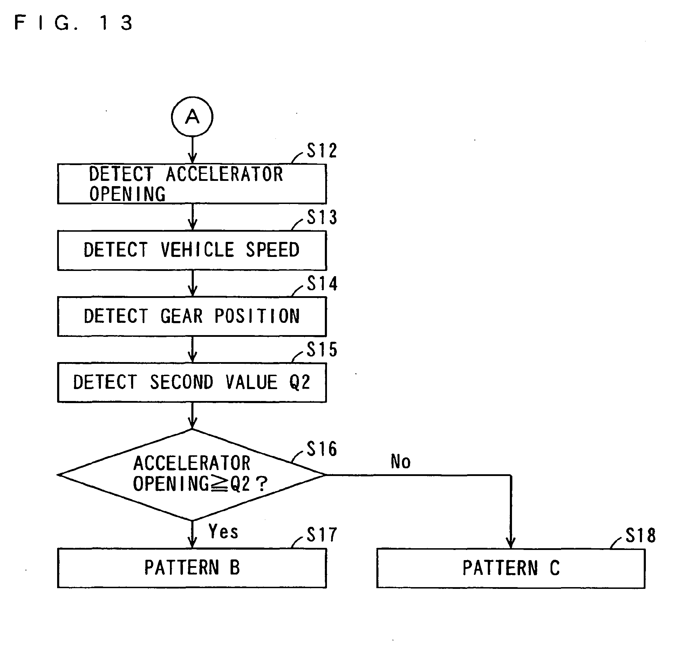

Figs. 12 and 13 are flow charts illustrating the transmission control in the semi-automatic control mode by the CPU 91.

In step S1, the CPU 91 first determines whether or not the driver turns the up-shift switch 72a on. If the up-shift switch 72a is turned on (YES in step S1), the CPU 91 detects the accelerator opening based on the detected value of the accelerator opening sensor S33 in step S2, detects the vehicle speed based on the detected value of the vehicle speed sensor S34 in step S3, and detects the current gear position based on the detected value of the shift position sensor S32 in step S4.

In step S5, the CPU 91 then determines the first value Q1 from the relationship illustrated in Fig. 10 based on the detected vehicle speed and the detected current gear position. In step S6, the CPU 91 further determines whether or not the detected accelerator opening is the first value Q1 or more.

If the accelerator opening is the first value Q1 or more (YES in step S6), then in step S7, the CPU 91 carries out the transmission control according to the pattern A. On the other hand, if the accelerator opening is less than the first value Q1 (NO in step S6), then in step S8, the CPU 91 carries out the transmission control according to the pattern B.

If the up-shift switch 72a is not turned on (NO in step S1), then in step S11, the CPU 91 determines whether or not the driver turns the down-shift switch 72b on. If the down-shift switch 72b is turned on (YES in step S11), the CPU 91 detects the accelerator opening based on the detected value of the accelerator opening sensor S33 in step S12, detects the vehicle speed based on the detected value of the vehicle speed sensor S34 in step S13, and detects the current gear position based on the detected value of the shift position sensor S32 in step S14.

In step S15, the CPU 91 then determines the second value Q1 from the relationship illustrated in Fig. 11 based on the detected vehicle speed and the detected current gear position. In step S16, the CPU 91 further determines whether or not the detected accelerator opening is the second value Q2 or more.

If the accelerator opening is the second value Q2 or more (YES in step S16), then in step S17, the CPU 91 carries out the transmission control according to the pattern B. On the other hand, if the accelerator opening is less than the second value Q2 (NO in step S17), then in step S18, the CPU 91 carries out the transmission control according to the pattern C.

If the down-shift switch 72b is not turned on (NO in step S11), the processing is returned to step S1.

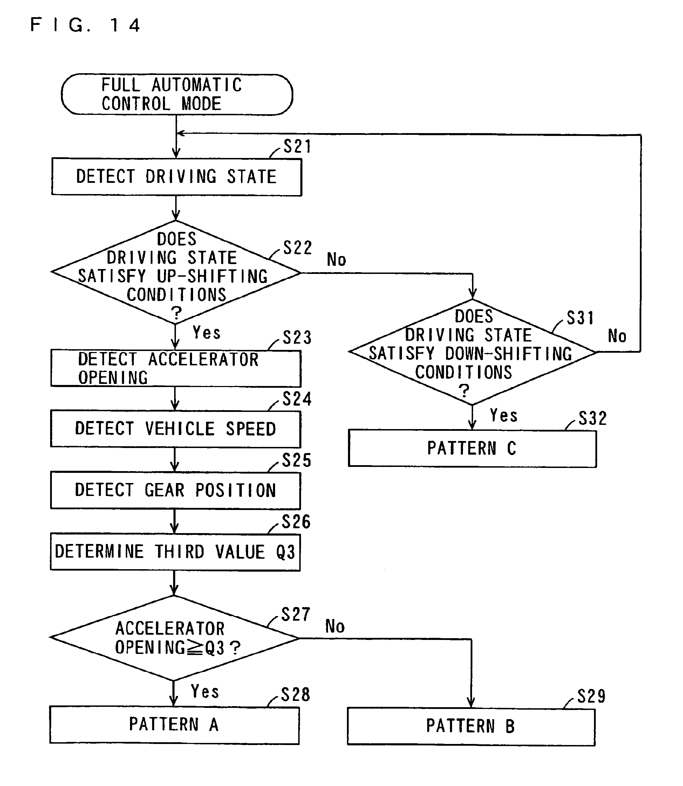

Fig. 14 is a flowchart illustrating the transmission control in the full automatic control mode by the CPU 91.

In step S21, the CPU 91 first detects the driving state of the motorcycle 1 based on at least one of the detected values of the sensors S31 to S37. In step S22, the CPU 91 further determines whether or not the detected driving state satisfies predetermined up-shifting conditions.

If the driving state satisfies the up-shifting conditions (YES in step S22), the CPU 91 detects the accelerator opening based on the detected value of the accelerator opening sensor S33 in step S23, detects the vehicle speed based on the detected value of the vehicle speed sensor S34 in step S24, and detects the current gear position based on the detected value of the shift position sensor S32 in step S25.

In step S26, the CPU 91 then determines the third value Q3 based on the detected vehicle speed and the detected current gear position. In step S27, the CPU 91 further determines whether or not the detected accelerator opening is the third value Q3 or more.

If the accelerator opening is the third value Q3 or more (YES in step S27), then in step S28, the CPU 91 carries out the transmission control according to the pattern A. On the other hand, if the accelerator opening is less than the third value Q3 (NO in step S27), then in step S29, the CPU 91 carries out the transmission control according to the pattern B.

If the driving state does not satisfy the up-shifting conditions (NO in step S22), then in step S31, the CPU 91 determines whether or not the detected driving state satisfies predetermined down-shifting conditions.

If the driving state satisfies the down-shifting conditions (YES in step S31), then in step S32, the CPU 91 carries out the transmission control according to the pattern C.

If the detected driving state does not satisfy the predetermined down-shifting conditions (NO in step S31), the processing is returned to step S21.

### (8) Effects of embodiment

In the motorcycle 1 according to the present embodiment, if the accelerator opening is the first value Q1 or more in the semi-automatic control mode during the up-shifting, the transmission control is carried out according to the pattern A. Thus, the gear position 9 of the transmission 43 is quickly changed without disconnecting the clutch 44 at timing intended by the driver with the output of the engine 45 being high. This enables high sportiness driving.

If the accelerator opening is less than the first value Q1 in the semi-automatic control mode during the up-shifting, the transmission control is carried out according to the pattern B. This enables relatively high sportiness and relatively comfortable driving with the output of the engine 45 being low.

Furthermore, if the accelerator opening is the second value Q2 or more in the full automatic control mode during the up-shifting, the transmission control is carried out according to the pattern B. Thus, the gear position of the transmission 43 is quickly changed automatically. This enables relatively high sportiness and relatively comfortable driving with the output of the engine 45 being high.

If the accelerator opening is less than the second value Q2 in the full automatic control mode during the up-shifting, the transmission control is carried out according to the pattern C. Thus, the gear position of the transmission 43 is smoothly changed automatically. This enables sufficiently comfortable driving with the output of the engine 45 being low.

On the other hand, if the accelerator opening is the third value Q3 or more in the semi-automatic control mode during the down-shifting, the transmission control is carried out according to the pattern A. Thus, the gear position of the transmission 43 is quickly changed without disconnecting the clutch 44 at timing intended by the driver with the output of the engine 45 being high. This enables high sportiness driving.

If the accelerator opening is less than the third value Q3 in the semi-automatic control mode during the down-shifting, the transmission control is carried out according to the pattern B. This enables relatively high sportiness and relatively comfortable driving with the output of the engine 45 being low.

Furthermore, the transmission control is carried out according to the pattern C irrespective of the accelerator opening in the full automatic control mode during the down-shifting. Thus, the gear position of the transmission 43 is smoothly changed automatically. This enables sufficiently comfortable driving irrespective of the output of the engine 45.

### (9) Other examples of combination of control patterns

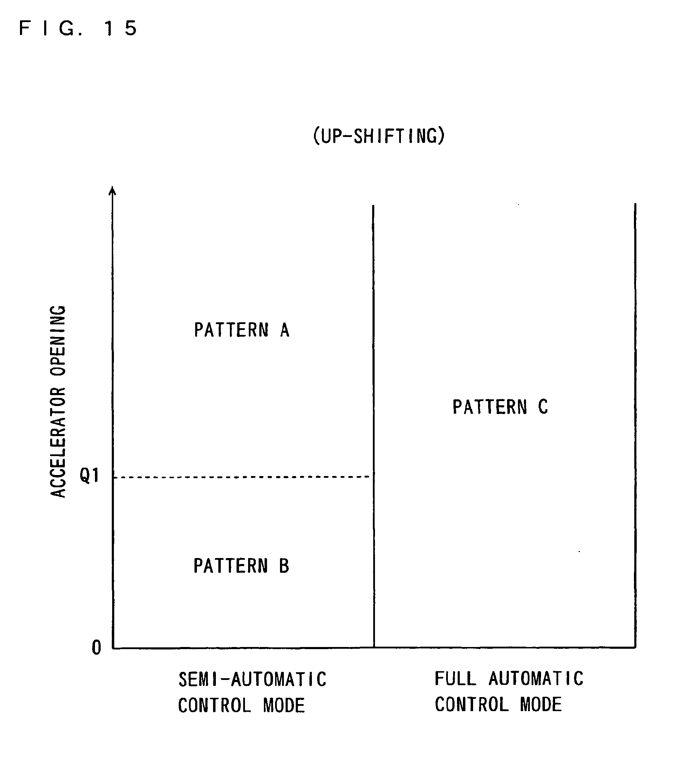

Other examples of a combination of respective control patterns in a semi-automatic control mode and a full automatic control mode will be then described with reference to Figs. 15 to 18. In Figs. 15 to 18, the longitudinal axis represents an accelerator opening.

Fig. 15 illustrates another example of the relationship between respective control patterns in the semi-automatic control mode and the full automatic control mode during up-shifting and an accelerator opening.

In the semi-automatic control mode, if the accelerator opening is a first value Q1 or more, transmission control is carried out according to a pattern A. This enables high sportiness driving. If the accelerator opening is less than the first value Q1, transmission control is carried out according to a pattern B. This enables relatively high sportiness and relatively comfortable driving.

In the full automatic control mode, transmission control is carried out according to a pattern C irrespective of the accelerator opening. This enables comfortable driving.

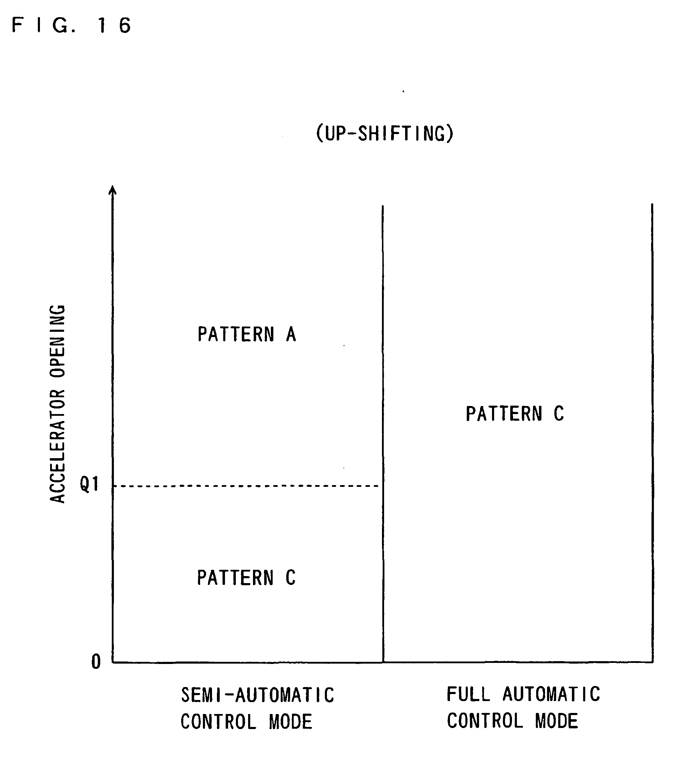

Fig. 16 illustrates still another example of the relationship between respective control patterns in the semi-automatic control mode and the full automatic control mode during up-shifting and an accelerator opening.

In the semi-automatic control mode, if the accelerator opening is a first value Q1 or more, transmission control is carried out according to a pattern A. This enables high sportiness driving. If the accelerator opening is less than the first value Q1, transmission control is carried out according to a pattern C. This enables comfortable driving.

In the full automatic control mode, transmission control is carried out according to a pattern C irrespective of the accelerator opening. This enables comfortable driving.

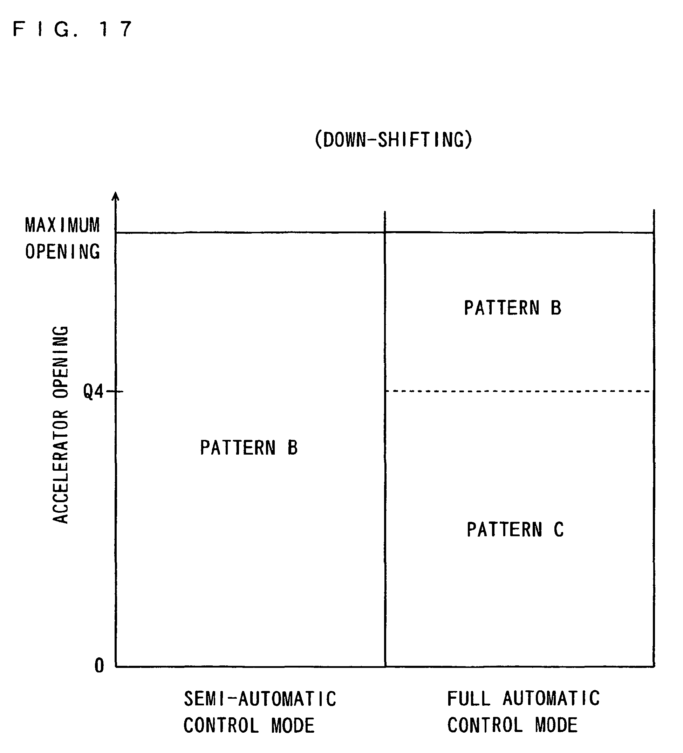

Fig. 17 illustrates another example of the relationship between respective control patterns in the semi-automatic control mode and the full automatic control mode during down-shifting and an accelerator opening.

In the semi-automatic control mode, transmission control is carried out according to a pattern B irrespective of the accelerator opening. This enables relatively high sportiness and relatively comfortable driving.

In the full automatic control mode, if the accelerator opening is a fourth value Q4 or more, transmission control is carried out according to a pattern B. This enables relatively high sportiness and relatively comfortable driving. If the accelerator opening is less than the fourth value Q4, transmission control is carried out according to a pattern C. This enables comfortable driving.

The fourth value Q4 is stored in the RAM 92 or the ROM 93 in the ECU 90 illustrated in Fig. 4.

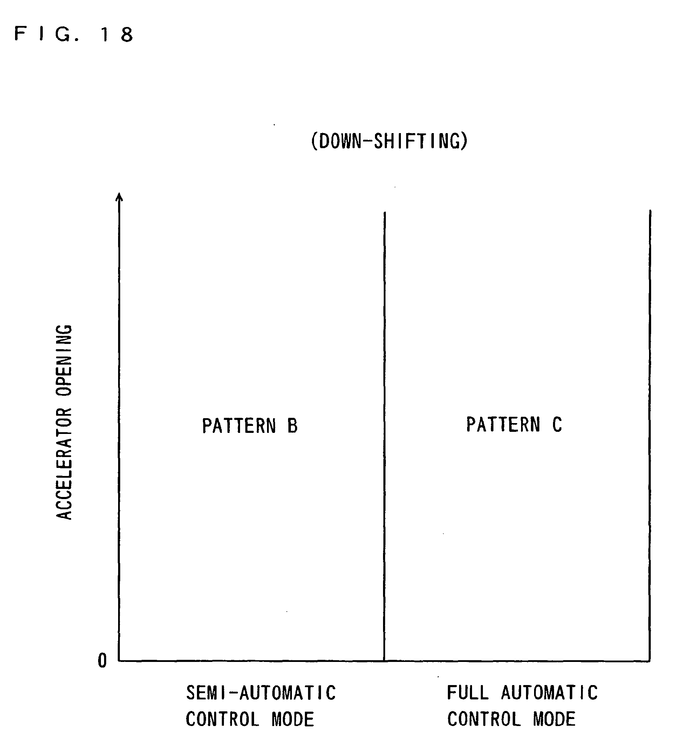

Fig. 18 illustrates still another example of the relationship between respective control patterns in the semi-automatic control mode and the full automatic control mode during down-shifting and an accelerator opening.

In the semi-automatic control mode, transmission control is carried out according to a pattern B irrespective of the accelerator opening. This enables relatively high sportiness and relatively comfortable driving.

In the full automatic control mode, transmission control is carried out according to a pattern C irrespective of the accelerator opening. This enables comfortable driving.

### (10) Another embodiment

(a) Although in the above-mentioned embodiment, the first value Q1 changes depending on the vehicle speed, the first value Q1 may be constant irrespective of the vehicle speed. Similarly, the second value Q2 may be constant irrespective of the vehicle speed, and the third value Q3 may be constant irrespective of the vehicle speed.
(b) Although in the above-mentioned embodiment, the first value Q1 changes depending on the current gear position, the first value Q1 may be constant irrespective of the current gear position. Similarly, the second value Q2 may be constant irrespective of the current gear position, and the third value Q3 may be constant irrespective of the current gear position.
(c) An engine 45 is not limited to an internal combustion engine such as a gasoline engine. For example, the engine 45 may be a motor engine. In this case, power supplied to the motor engine depending on the operation amount of an accelerator 63 is controlled. Alternatively, the engine 45 may be a combination of a gasoline engine and a motor engine.
(d) Although in the above-mentioned embodiment, the actuator device is composed of the clutch actuator 60 and the shift actuator 70 that are separate from each other, an actuator device may be a single actuator that switches a clutch 44 and switches transmission gears 49 and 420 in a transmission 43.
   In this case, the potentiometers 38 and 39 may be replaced with a single potentiometer.
(e) Although in the above-mentioned embodiment, the clutch device 44 is composed of the single clutch 44, a clutch device may be composed of a plurality of clutches.
(f) Although in the above-mentioned embodiment, a mechanism in which the push rod 455 is inserted into the main shaft 41 pushes the pressure plate 451 toward one end (rightward in Fig. 2), the present invention is not limited to the same. A mechanism in which a push rod 455 is provided at one end (a portion at the right in Fig. 2) of a pressure plate 451 may pull the pressure plate 451 toward one end (rightward in Fig. 2).
(g) Although in the above-mentioned embodiment, the rear wheel 23 is a driving wheel, a front wheel 12 may be a driving wheel.
(h) Although in the above-mentioned embodiment, the function of the control device is realized by the CPU 91 in the ECU 90 and the transmission control program, the function of a control device may be realized by hardware such as an electronic circuit. In this case, a determination unit that determines switching between a semi-automatic control mode and a full automatic control mode and switching between up-shifting and down-shifting, a semi-automatic control unit that carries out transmission control in the semi-automatic control mode, a full automatic control unit that carries out transmission control in the full automatic control mode, and a driving state detection unit that detects a driving state may be composed of separate electronic circuits or a common electronic circuit.

### (11) Correspondences between constituent elements in the claims and parts in embodiments

In the following two paragraphs, non-limiting examples of correspondences between various elements recited in the claims below and those described above with respect to various embodiments of the present invention are explained.

In the embodiments described above, the engine 45 is an example of an engine, the accelerator 63 is an example of an accelerator, the clutch 44 is an example of a clutch device, the transmission 43 is an example of a transmission, the main shaft 41 is an example of a first rotating shaft, the drive shaft 42 is an example of a second rotating shaft, the rear wheel 23 is an example of a driving wheel, the clutch actuator 60 and the shift actuator 70 are examples of an actuator device, the shift switch is an example of a shifting instructor, at least one of the sensors S31 to S37 is an example of a driving state detector, and the ECU 90 is an example of a control device.

The semi-automatic control mode is an example of a first control mode, the full automatic control mode is an example of a second control mode, the accelerator opening is an example of a operation amount of an accelerator, the pattern A is an example of a first control pattern, the pattern B or the pattern C is an example of a second control pattern, the pattern B or the pattern C is an example of a third control pattern, the pattern B is an example of a first connection transition pattern, the pattern C is an example of a second connection transition pattern, the pattern B or the pattern C is an example of a fourth control pattern, and the pattern B or the pattern C is an example of a fifth control pattern.

Furthermore, the first value Q1 is an example of a first value, the second value Q2 is an example of a second value, the third value Q3 is an example of a third value, the first period of time T1 is an example of a first period of time, and the second period of time T2 is an example of a second period of time.

As each of various elements recited in the claims, various other elements having configurations or functions described in the claims may be also used.

While preferred embodiments of the present invention have been described above, it is to be understood that variations and modifications will be apparent to those skilled in the art without departing the scope and spirit of the present invention. The scope of the present invention, therefore, is to be determined solely by the following claims.

## Claims

1. A motorcycle comprising:
an engine (45);
an accelerator (63) that is operated by a user to adjust an output of the said engine (45);
a first rotating shaft (41);
a clutch device (44) that is switchable to a transmitting state where a torque generated by said engine (45) is transmitted to said first rotating shaft (41) and a disconnected state where the torque generated by said engine (45) is not transmitted to said first rotating shaft (41);
a second rotating shaft (42);
a transmission (43) that transmits to said second rotating shaft (42) the torque transmitted to said first rotating shaft (41);
a driving wheel (23) that is driven by the torque transmitted to said second rotating shaft (42);
an actuator device (60, 70) that drives said clutch device (44) and said transmission (43);
a shifting instructor (72, 72a, 72b) configured to generate instructions for up-shifting or down-shifting of said transmission (43) by a user's operation;
a driving state detector (S31-S37) that detects the driving state of said motorcycle (1); and
a control device (50) that is switchable to a first transmission control mode in which said actuator device (60, 70) is controlled in response to the instructions generated by said shifting instructor (72, 72a, 72b) and a second transmission control mode in which said actuator device (60, 70) is controlled in response to the driving state detected by said driving state detector (S31-S37),
**characterized in that**
said control device (50) controls said actuator device (60, 70) according to a first control pattern for changing the gear position of said transmission (43) without switching said clutch device (44) to the disconnected state when the operation amount of said accelerator (63) is a first value or more, while controlling said actuator device (60, 70) according to a second control pattern for changing the gear position of said transmission (43) by switching said clutch device (44) to the disconnected state when the operation amount of said accelerator (63) is less than said first value in said first transmission control mode during the up-shifting, and
said control device (50) controls said actuator device (60, 70) according to a third control pattern for changing the gear position of said transmission (43) by switching said clutch device (44) to the disconnected state in said second transmission control mode during the up-shifting.

2. The motorcycle according to claim 1, wherein said first value is set such that the higher the traveling speed of said motorcycle (1) is, the lower the first value becomes.

3. The motorcycle according to claim 1 or 2, wherein said first value is set higher during a change from the first gear position to the second gear position than during a change from the second or higher gear position to the succeeding gear position.

4. The motorcycle according to claim 1 or 2, wherein
said second control pattern includes a first connection transition pattern for shifting said clutch device (44) from the disconnected state to the transmitting state in a first period of time after the gear position of said transmission (43) is changed, and a second connection transition pattern for shifting said clutch device (44) from the disconnected state to the transmitting state in a second period of time longer than said first period of time after the gear position of said transmission (43) is changed, and
said third control pattern includes said first connection transition pattern or said second connection transition pattern.

5. The motorcycle according to claim 4, wherein
said control device (50) controls said actuator device (60, 70) according to said second control pattern including said first connection transition pattern when the operation amount of said accelerator (63) is less than said first value in said first transmission control mode during the up-shifting, and
said control device (50) controls said actuator device (60, 70) according to said third control pattern including said first connection transition pattern when the operation amount of said accelerator (63) is a second value or more, while controlling said actuator device (60, 70) according to said third control pattern including said second connection transition pattern when the operation amount of said accelerator (63) is less than said second value in said second transmission control mode during the up-shifting.

6. The motorcycle according to claim 5, wherein said second value is set such that the higher the traveling speed of said motorcycle (1) is, the lower said second value becomes.

7. The motorcycle according to claim 5 or 6, wherein said second value is set higher during a change from the first gear position to the second gear position than during a change from the second or higher gear position to the succeeding gear position.

8. The motorcycle according to claim 4, wherein
said control device (50) controls said actuator device (60, 70) according to said second control pattern including said first connection transition pattern when the operation amount of said accelerator (63) is less than said first value in said first transmission control mode during the up-shifting, and
said control device (50) controls said actuator device (60, 70) according to said third control pattern including said second connection transition pattern in said second transmission control mode during the up-shifting.

9. The motorcycle according to claim 4, wherein
said control device (50) controls said actuator device (60, 70) according to said second control pattern including said second connection transition pattern when the operation amount of said accelerator (63) is less than said first value in said first transmission control mode during the up-shifting, and
said control device (50) controls said actuator device (60, 70) according to said third control pattern including said second connection transition pattern in said second transmission control mode during the up-shifting.

10. The motorcycle according to any one of claims 1 to 9, wherein
said control device (50) controls the actuator device (60, 70) according to a fourth control pattern for shifting the clutch device (44) from the disconnected state to the transmitting state in a third period of time after the gear position of the transmission (43) is changed by switching the clutch device (44) to the disconnected state when the operation amount of the accelerator (63) is within at least a part of its range in the first transmission control mode during the down-shifting, and
said control device (50) controls the actuator device (60, 70) according to a fifth control pattern for shifting the clutch device (44) from the disconnected state to the transmitting state in a fourth period of time longer than the third period of time after the gear position of the transmission (43) is changed by switching the clutch device (44) to the disconnected state when the operation amount of the accelerator (63) is within at least a part of its range in the second transmission control mode during the down-shifting.

## Patentansprüche

1. Ein Motorrad, das folgende Merkmale aufweist:
einen Motor (45);
einen Gashebel (63), der durch einen Benutzer betrieben wird, um eine Ausgabe des Motors (45) zu regulieren;
eine erste sich drehende Welle (41);
eine Kupplungsvorrichtung (44), die in einen Übertragungszustand, in dem ein Drehmoment, das durch den Motor (45) erzeugt wird, auf die erste sich drehende Welle (41) übertragen wird, sowie in einen entkoppelten Zustand schaltbar ist, in dem das Drehmoment, das durch den Motor (45) erzeugt wird, nicht auf die erste sich drehende Welle (41) übertragen wird;
eine zweite sich drehende Welle (42);
ein Getriebe (43), das das Drehmoment, das auf die erste sich drehende Welle (41) übertragen wird, auf die zweite sich drehende Welle (42) überträgt;
ein Antriebsrad (23), das durch das Drehmoment, das auf die zweite sich drehende Welle (42) übertragen wird, angetrieben wird;
eine Betätigungselementvorrichtung (60, 70), die die Kupplungsvorrichtung (44) und
das Getriebe (43) antreibt;
einen Schaltinstruierer (72, 72a, 72b), der ausgebildet ist, um Befehle zum Aufwärtsschalten oder Abwärtsschalten des Getriebes (43) durch eine Handlung des Benutzers zu erzeugen;
einen Antriebszustandsdetektor (S31-S37), der den Antriebszustand des Motorrads (1) erfasst; und
eine Steuervorrichtung (50), die in einen ersten Übertragungssteuermodus, in dem die Betätigungselementvorrichtung (60, 70) ansprechend auf die Befehle gesteuert wird, die durch den Schaltinstruierer (72, 72a, 72b) erzeugt werden, sowie in einen zweiten Übertragungssteuermodus schaltbar ist, in dem die Betätigungselementvorrichtung (60, 70) ansprechend auf den Antriebszustand gesteuert wird, der durch den Antriebszustandsdetektor (S31-S37) erfasst wird,
**dadurch gekennzeichnet, dass**
die Steuervorrichtung (50) die Betätigungselementvorrichtung (60, 70) gemäß einem ersten Steuermuster zum Verändern der Gangposition des Getriebes (43) steuert, ohne die Kupplungsvorrichtung (44) in den entkoppelten Zustand zu schalten, wenn die Betriebsmenge des Gashebels (63) ein erster Wert oder mehr ist, während die Betätigungselementvorrichtung (60, 70) gemäß einem zweiten Steuermuster zum Verändern der Gangposition des Getriebes (43) durch Schalten der Kupplungsvorrichtung (44) in den entkoppelten Zustand gesteuert wird, wenn die Betriebsmenge des Gashebels (63) kleiner ist als der erste Wert, und zwar in dem ersten Übertragungssteuermodus während des Aufwärtsschaltens, und
die Steuervorrichtung (50) die Betätigungselementvorrichtung (60, 70) gemäß einem dritten Steuermuster zum Verändern der Gangposition des Getriebes (43) durch Schalten der Kupplungsvorrichtung (44) in den entkoppelten Zustand steuert, und zwar in dem zweiten Übertragungssteuermodus während des Aufwärtsschaltens.

2. Das Motorrad gemäß Anspruch 1, bei dem der erste Wert derart eingestellt ist, dass der erste Wert umso niedriger wird, je höher die Bewegungsgeschwindigkeit des Motorrads (1) ist.

3. Das Motorrad gemäß Anspruch 1 oder 2, bei dem der erste Wert während einer Änderung aus der ersten Gangposition in die zweite Gangposition höher eingestellt ist als während einer Änderung aus der zweiten oder einer höheren Gangposition in die nachfolgende Gangposition.

4. Das Motorrad gemäß Anspruch 1 oder 2, bei dem:
das zweite Steuermuster ein erstes Verbindungsübergangsmuster zum Schalten der Kupplungsvorrichtung (44) aus dem entkoppelten Zustand in den Übertragungszustand in einem ersten Zeitraum, nachdem die Gangposition des Getriebes (43) verändert wurde, und ein zweites Verbindungsübergangsmuster zum Schalten der Kupplungsvorrichtung (44) aus dem entkoppelten Zustand in den Übertragungszustand in einem zweiten Zeitraum, der länger ist als der erste Zeitraum, nachdem die Gangposition des Getriebes (43) verändert wurde, umfasst, und
das dritte Steuermuster das erste Verbindungsübergangsmuster oder das zweite Verbindungsübergangsmuster umfasst.

5. Das Motorrad gemäß Anspruch 4, bei dem:
die Steuervorrichtung (50) die Betätigungselementvorrichtung (60, 70) gemäß dem zweiten Steuermuster, das das erste Verbindungsübergangsmuster umfasst, steuert, wenn die Betriebsmenge des Gashebels (63) kleiner ist als der erste Wert, und zwar in dem ersten Übertragungssteuermodus während des Aufwärtsschaltens, und
die Steuervorrichtung (50) die Betätigungselementvorrichtung (60, 70) gemäß dem dritten Steuermuster, das das erste Verbindungsübergangsmuster umfasst, steuert, wenn die Betriebsmenge des Gashebels (63) ein zweiter Wert oder mehr ist, während die Betätigungselementvorrichtung (60, 70) gemäß dem dritten Steuermuster, das das zweite Verbindungsübergangsmuster umfasst, gesteuert wird, wenn die Betriebsmenge des Gashebels (63) kleiner ist als der zweite Wert, und zwar in dem zweiten Übertragungssteuermodus während des Aufwärtsschaltens.

6. Das Motorrad gemäß Anspruch 5, bei dem der zweite Wert derart eingestellt ist, dass der zweite Wert umso niedriger wird, je höher die Bewegungsgeschwindigkeit des Motorrads (1) ist.

7. Das Motorrad gemäß Anspruch 5 oder 6, bei dem der zweite Wert während einer Änderung aus der ersten Gangposition in die zweite Gangposition höher eingestellt ist als während einer Änderung aus der zweiten oder einer höheren Gangposition in die nachfolgende Gangposition.

8. Das Motorrad gemäß Anspruch 4, bei dem:
die Steuervorrichtung (50) die Betätigungselementvorrichtung (60, 70) gemäß dem zweiten Steuermuster, das das erste Verbindungsübergangsmuster umfasst, steuert, wenn die Betriebsmenge des Gashebels (63) kleiner ist als der erste Wert, und zwar in dem ersten Übertragungssteuermodus während des Aufwärtsschaltens, und die Steuervorrichtung (50) die Betätigungselementvorrichtung (60, 70) gemäß dem dritten Steuermuster, das das zweite Verbindungsübergangsmuster umfasst, steuert, und zwar in dem zweiten Übertragungssteuermodus während des Aufwärtsschaltens.

9. Das Motorrad gemäß Anspruch 4, bei dem:
die Steuervorrichtung (50) die Betätigungselementvorrichtung (60, 70) gemäß dem zweiten Steuermuster, das das zweite Verbindungsübergangsmuster umfasst, steuert, wenn die Betriebsmenge des Gashebels (63) kleiner ist als der erste Wert, und zwar in dem ersten Übertragungssteuermodus während des Aufwärtsschaltens, und
die Steuervorrichtung (50) die Betätigungselementvorrichtung (60, 70) gemäß dem dritten Steuermuster, das das zweite Verbindungsübergangsmuster umfasst, steuert, und zwar in dem zweiten Übertragungssteuermodus während des Aufwärtsschaltens.

10. Das Motorrad gemäß einem der Ansprüche 1 bis 9, bei dem:
die Steuervorrichtung (50) die Betätigungselementvorrichtung (60, 70) gemäß einem vierten Steuermuster zum Schalten der Kupplungsvorrichtung (44) aus dem entkoppelten Zustand in den Übertragungszustand in einem dritten Zeitraum, nachdem die Gangposition des Getriebes (43) verändert wurde, durch Schalten der Kupplungsvorrichtung (44) in den entkoppelten Zustand steuert, wenn die Betriebsmenge des Gashebels (63) innerhalb zumindest eines Teils ihres Bereichs liegt, und zwar in dem ersten Übertragungssteuermodus während des Abwärtsschaltens, und
die Steuervorrichtung (50) die Betätigungselementvorrichtung (60, 70) gemäß einem fünften Steuermuster zum Schalten der Kupplungsvorrichtung (44) aus dem entkoppelten Zustand in den Übertragungszustand in einem vierten Zeitraum, der länger ist als der dritte Zeitraum, nachdem die Gangposition des Getriebes (43) verändert wurde, durch Schalten der Kupplungsvorrichtung (44) in den entkoppelten Zustand steuert, wenn die Betriebsmenge des Gashebels (63) innerhalb zumindest eines Teils ihres Bereichs liegt, und zwar in dem zweiten Übertragungssteuermodus während des Abwärtsschaltens.

## Revendications

1. Motocyclette, comprenant:
un moteur (45);
un accélérateur (63) qui est actionné par un utilisateur pour ajuster une sortie dudit moteur (45);
un premier arbre rotatif (41);
un dispositif d'embrayage (44) qui est commutable à un état de transmission où un couple généré par ledit moteur (45) est transmis audit arbre rotatif (41) et un état déconnecté où le couple généré par ledit moteur (45) n'est pas transmis audit premier arbre rotatif (41);
un deuxième arbre rotatif (42);
une transmission (43) qui transmet audit deuxième arbre rotatif (42) le couple transmis audit premier arbre rotatif (41);
une roue d'entraînement (23) qui est entraînée par le couple transmis audit deuxième arbre rotatif (42);
un dispositif d'actionnement (60, 70) qui entraîne ledit dispositif d'embrayage (44) et ladite transmission (43);
un instructeur de changement de vitesse (72, 72a, 72b) configuré pour générer des instructions pour changer ladite transmission (43) vers le haut ou vers le bas par une opération de l'utilisateur;
un détecteur d'état d'entraînement (S31-S37) qui détecte l'état d'entraînement de ladite motocyclette (1); et
un dispositif de commande (50) qui est commutable à un premier mode de commande de transmission dans lequel ledit dispositif d'actionnement (60, 70) est commandé en réponse aux instructions générées par ledit instructeur de changement de vitesse (72, 72a, 72b) et un deuxième mode de commande de transmission dans lequel ledit dispositif d'actionnement (60, 70) est commandé en réponse à l'état d'entraînement détecté par ledit détecteur d'état d'entraînement (S31-S37),
**caractérisé par le fait que**
ledit dispositif de commande (50) commande ledit dispositif d'actionnement (60, 70) selon un premier modèle de commande pour changer la position d'engrenage de ladite transmission (43) sans commuter ledit dispositif d'embrayage (44) à l'état déconnecté lorsque la quantité de fonctionnement dudit accélérateur (63) est une première valeur ou plus, tandis qu'il commande ledit dispositif d'actionnement (60, 70) selon un deuxième modèle de commande pour changer la position d'engrenage de ladite transmission (43) en commutant ledit dispositif d'embrayage (44) à l'état déconnecté lorsque la quantité de fonctionnement dudit accélérateur (63) est inférieure à ladite première valeur dans ledit premier mode de commande de transmission pendant le changement vers le haut, et
ledit dispositif de commande (50) commande ledit dispositif d'actionnement (60, 70) selon un troisième modèle de commande pour changer la position d'engrenage de ladite transmission (43) en commutant ledit dispositif d'embrayage (44) à l'état déconnecté dans ledit deuxième mode de commande de transmission pendant le changement vers le haut.

2. Motocyclette selon la revendication 1, dans laquelle ladite première valeur est réglée de sorte que plus la vitesse de déplacement de ladite motocyclette (1) est élevée, plus la première valeur devient petite.

3. Motocyclette selon la revendication 1 ou 2, dans laquelle ladite première valeur est réglée plus élevée pendant un changement de la première position d'engrenage à la deuxième position d'engrenage que pendant un changement de la deuxième position d'engrenage ou une position supérieure à la position d'engrenage suivante.

4. Motocyclette selon la revendication 1 ou 2, dans laquelle
ledit deuxième modèle de commande comporte un premier modèle de transition de connexion pour changer ledit dispositif d'embrayage (44) de l'état déconnecté à l'état de transmission dans un premier laps de temps après que soit changée la position d'engrenage de ladite transmission (43), et un deuxième modèle de transition de connexion pour changer ledit dispositif d'embrayage (44) de l'état déconnecté à l'état de transmission dans un deuxième laps de temps plus long que ledit premier laps de temps après que soit changée la position d'engrenage de ladite transmission (43), et
ledit troisième modèle de commande comporte ledit premier modèle de transition de connexion ou ledit deuxième modèle de transition de connexion.

5. Motocyclette selon la revendication 4, dans laquelle ledit dispositif de commande (50) commande ledit dispositif d'actionnement (60, 70) selon ledit deuxième modèle de commande comportant ledit premier modèle de transition de connexion lorsque la quantité de fonctionnement dudit accélérateur (63) est inférieure à ladite première valeur dans ledit premier mode de commande de transmission pendant le changement vers le haut, et
ledit dispositif de commande (50) commande ledit dispositif d'actionnement (60, 70) selon ledit troisième modèle de commande comportant ledit premier modèle de transition de connexion lorsque la quantité de fonctionnement dudit accélérateur (63) est une deuxième valeur ou plus, tandis qu'il commande ledit dispositif d'actionnement (60, 70) selon ledit troisième modèle de commande comportant ledit deuxième modèle de transition de connexion lorsque la quantité de fonctionnement dudit accélérateur (63) est inférieure à ladite deuxième valeur dans ledit deuxième mode de commande de transmission pendant le changement vers le haut.

6. Motocyclette selon la revendication 5, dans laquelle ladite deuxième valeur est réglée de sorte que plus la vitesse de déplacement de ladite motocyclette (1) est élevée, plus ladite deuxième valeur devient petite.

7. Motocyclette selon la revendication 5 ou 6, dans laquelle ladite deuxième valeur est réglée plus élevée pendant un changement de la première position d'engrenage à la deuxième position d'engrenage que pendant un changement de la deuxième position d'engrenage ou supérieure à la position d'engrenage suivante.

8. Motocyclette selon la revendication 4, dans laquelle
ledit dispositif de commande (50) commande ledit dispositif d'actionnement (60, 70) selon ledit deuxième modèle de commande comportant ledit premier modèle de transition de connexion lorsque la quantité de fonctionnement dudit accélérateur (63) est inférieure à ladite première valeur dans ledit premier mode de commande de transmission pendant le changement vers le haut, et
ledit dispositif de commande (50) commande ledit dispositif d'actionnement (60, 70) selon ledit troisième modèle de commande comportant ledit deuxième modèle de transition de connexion dans ledit deuxième mode de commande de transmission pendant le changement vers le haut.

9. Motocyclette selon la revendication 4, dans laquelle
ledit dispositif de commande (50) commande ledit dispositif d'actionnement (60, 70) selon ledit deuxième modèle de commande comportant ledit deuxième modèle de transition de connexion lorsque la quantité de fonctionnement dudit accélérateur (63) est inférieure à ladite première valeur dans ledit premier mode de commande de transmission pendant le changement vers le haut, et
ledit dispositif de commande (50) commande ledit dispositif d'actionnement (60, 70) selon ledit troisième modèle de commande comportant ledit deuxième modèle de transition de connexion dans ledit deuxième mode de commande de transmission pendant le changement vers le haut.

10. Motocyclette selon l'une quelconque des revendications 1 à 9, dans laquelle
ledit dispositif de commande (50) commande ledit dispositif d'actionnement (60, 70) selon un quatrième modèle de commande pour changer le dispositif d'embrayage (44) de l'état déconnecté à l'état de transmission dans un troisième laps de temps après que soit changée la position d'engrenage de ladite transmission (43) en commutant le dispositif d'embrayage (44) à l'état déconnecté lorsque la quantité de fonctionnement de l'accélérateur (63) se situe au moins dans une partie de sa plage dans le premier mode de commande de transmission pendant le changement vers le bas, et
ledit dispositif de commande (50) commande ledit dispositif d'actionnement (60, 70) selon un cinquième modèle de commande pour changer le dispositif d'embrayage (44) de l'état déconnecté à l'état de transmission dans un quatrième laps de temps plus long que le troisième laps de temps après que soit changée la position d'engrenage de la transmission (43) en commutant le dispositif d'embrayage (44) à l'état déconnecté lorsque la quantité de fonctionnement de l'accélérateur (63) se situe au moins dans une partie de sa plage dans le deuxième mode de commande de transmission pendant le changement vers le bas.
